# EUROPÄISCHE PATENTSCHRIFT

(11) **EP 4 108 481 B1**
(45) Veröffentlichungstag und Bekanntmachung des Hinweises auf die Patenterteilung: **29.01.2025**
(21) Anmeldenummer: 22180734.0
(22) Anmeldetag: 23.06.2022
(51) Int. Cl.: B60D 1/06, B60D 1/54

(54) **ANHÄNGEVORRICHTUNG**
TOWING DEVICE
DISPOSITIF D'ATTELAGE

(30) Priorität: 23.06.2021 DE 102021116185
(43) Veröffentlichungstag der Anmeldung: 28.12.2022
(73) Patentinhaber: MVG Metallverarbeitungsgesellschaft mbH, 52249 Eschweiler (DE)
(72) Erfinder: Gardenier, Maurice, 52353 Düren (DE); Michels, Max, 52062 Aachen (DE)
(74) Vertreter: Bauer, Dirk

(56) Entgegenhaltungen:
- EP-A1- 2 181 868
- EP-A2- 1 090 782
- EP-B1- 1 836 063
- DE-A1- 102006 041 699

## Beschreibung

Die Erfindung betrifft eine Anhängevorrichtung zur Anbringung an einem Heck eines Fahrzeugs gemäß dem Oberbegriff des Anspruchs 1.

Anhängevorrichtungen zur Anbringung an einem Heck eines Fahrzeugs sind dem Stand der Technik in vielfältiger Ausgestaltung als bekannt zu entnehmen. Mittels solcher Anhängevorrichtungen lassen sich Zusatzgeräte, beispielsweise ein Anhänger, an das Fahrzeug ankuppeln. Üblicherweise sind Anhängevorrichtungen derart an dem Fahrzeug angeordnet, dass sie dessen Stoßfänger nach hinten überragen, mithin nach hinten überstehen. Dies erschwert dem Fahrer beispielsweise ein Rangieren auf engem Raum, Rückwärtsfahren im Allgemeinen oder Einparken.

Aus diesen Gründen sind dem Stand der Technik Weiterentwicklungen ursprünglicher Anhängevorrichtungen als bekannt zu entnehmen, die in unterschiedlicher Weise zumindest temporär derart an dem Fahrzeug angeordnet werden können, dass sie nicht über den baulich festgelegten Abschluss des Fahrzeugs hervorstehen.

Eine solche Anhängevorrichtung zur Anbringung an einem Heck eines Fahrzeugs umfasst eine mit einem Fahrzeugteil in Kraft übertragender Weise verbindbare Schwenklagereinheit, die eine vertikal verlaufende erste Schwenkachse definiert sowie einen in oder an der Schwenklagereinheit um die erste Schwenkachse schwenkbar gelagerten Schwenklagerkörper aufweist. Außerdem umfasst die Anhängevorrichtung eine Kugelstange, die an einem ersten Ende mit dem Schwenklagerkörper verbunden ist und an einem gegenüberliegenden freien zweiten Ende eine Kupplungskugel aufweist. Weiterhin weist die Anhängevorrichtung eine Antriebseinrichtung auf, mittels der die Kugelstange von einer Betriebsposition, in der sich die Kupplungskugel frei zugänglich hinter dem Heck des Fahrzeugs befindet, in eine Parkposition sowie umgekehrt überführbar ist, in der sich die Kupplungskugel verdeckt unterhalb des Fahrzeugs befindet. Hierbei ist Kugelstange während der Überführung von der Betriebsposition in die Parkposition und umgekehrt relativ zu dem Schwenklagerkörper rotatorisch um die erste Schwenkachse bewegbar. Des Weiteren umfasst die Anhängevorrichtung eine Kulissenführung, mittels der der Schwenklagerkörper während der Überführung von der Betriebsposition in die Parkposition sowie umgekehrt sowohl translatorisch in vertikale Richtung zwischen einem oberen Totpunkt und einem unteren Totpunkt als auch rotatorisch um die vertikal ausgerichtete erste Schwenkachse bewegbar ist. Hierbei ist vorgesehen, dass ein Kulissenstein an oder in der Schwenklagereinheit oder dem Schwenklagerkörper und eine mit dem Kulissenstein zusammenwirkende Kulissenbahn an oder in dem Schwenklagerkörper oder der Schwenklagereinheit angeordnet sind. Außerdem umfasst die Anhängevorrichtung mindestens eine Blockiereinrichtung, mittels der -jeweils sowohl in der Parkposition als auch in der Betriebsposition - der Schwenklagerkörper relativ zu der Schwenklagereinheit und die Kugelstange relativ zu dem Schwenklagerkörper oder der Schwenklagereinheit blockierbar sind.

Die Anhängevorrichtung, insbesondere deren Kugelstange, kann also in eine gewünschte Endstellung, nämlich entweder die Betriebsposition oder die Parkposition, und jeweils zwischen diesen, verschwenkt werden. Insbesondere in der Betriebsposition, in welcher üblicherweise beispielsweise ein Anhänger an die Kupplungskugel eingehängt wird, ist es erforderlich, dass die Kugelstange festsitzend in dieser Betriebsposition verbleibt, mithin arretiert ist. Es darf also nicht passieren, dass die Kugelstange unerwünscht zwischen der Betriebsposition und der Parkposition wechselt, da dies ein Ablösen beispielsweise des Anhängers bewirken und somit zu einem Unfall führen könnte. Vielmehr muss die Kugelstange in der jeweiligen Endstellung arretiert sein, sodass ein Wechseln von Betriebsposition zu Parkposition beziehungsweise umgekehrt ausschließlich auf Wunsch des Benutzers erfolgt. Zu diesem Zweck sind dem Stand der Technik Sicherungsvorrichtungen bekannt, mittels der die Kugelstange in der jeweiligen Endstellung arretierbar ist.

### Stand der Technik

Dem Stand der Technik sind derartige verschwenkbare Anhängevorrichtungen in vielfältiger Ausgestaltung als bekannt zu entnehmen.

Beispielsweise ist der europäischen Patentanmeldung EP 1 084 871 B1 eine Anhängevorrichtung für Kraftfahrzeuge, mit einer Kugelstange, an der sich üblicherweise eine Kupplungskugel befindet, als bekannt zu entnehmen. Hierbei ist die Kugelstange mittels eines Motors axial in Richtung der Kugelstange verstellbar ausgebildet, sodass diese zwischen der Betriebsposition und der Parkposition verschwenkt werden kann.

Außerdem ist der europäischen Patentanmeldung EP 1 836 063 B1 eine solche Anhängevorrichtung als bekannt zu entnehmen, wobei diese mit einem ersten und zweiten Verbindungselement versehen ist, mittels derer die Kugelstange in der Betriebsposition verriegelt werden kann. Hierbei befindet sich der Schwenklagerkörper insbesondere in unterster Stellung, mithin in einem untersten Totpunkt. Das erste Verbindungselement weist ein erstes Verbindungsteil auf, das bezogen auf die Kugelstange zwischen einer eingezogenen und einer ausgefahrenen Position beweglich ist. In der ausgefahrenen Position greift das erste Verbindungsteil derart in die Schwenklagereinheit ein, dass der Betätigungskörper relativ zu der Schwenklagereinheit blockiert ist und somit die Kugelstange arretiert ist. Demgegenüber befindet sich der Schwenklagerkörper in der Parkposition in oberster Stellung, mithin in einem oberen Totpunkt.

Außerdem ist es dem allgemeinen Stand der Technik bekannt, die Kugelstange beispielsweise mittels eines Stiftes in der Betriebsposition beziehungsweise der Parkposition zu sichern. Dazu wird der Stift, der beispielsweise in Form eines Keilschiebers ausgebildet sein kann, derart an beziehungsweise in der Kugelstange angeordnet, dass sich diese nicht relativ zu dem Schwenklagekörper beziehungsweise der Schwenklagereinheit bewegen kann. Der Stift kann beispielsweise durch eine Aussparung, der Kugelstange, insbesondere in Form einer Durchgangsbohrung, durch diese hindurch geschoben werden und greift von dort beispielsweise in eine Aussparung der Schwenklagereinheit ein. Auf diese Weise ist die Kugelstange durch den Stift zumindest mittelbar vor einer Bewegung relativ zu dieser gesichert.

Nachteilig bei dem vorgenannten Stand der Technik ist, dass die Kugelstange manuell gesichert wird. Einerseits ist dies aufwendig, da beispielsweise der Stift manuell bei jedem Wechsel von der Parkposition in die Betriebsposition beziehungsweise umgekehrt in der Kugelstange angeordnet werden muss. Andererseits ist dies fehleranfällig, da der Benutzer vergessen kann, die Kugelstange manuell zu sichern. In diesem Fall wäre die Kugelstange nicht gesichert und könnte somit unerwünscht von der einen in die andere Endstellung verschwenken.

### Aufgabe

Es ist Aufgabe der vorliegenden Erfindung, die Nachteile des Standes der Technik zu beseitigen und eine Anhängevorrichtung bereitzustellen, die besonders sicher und einfach in der jeweiligen Endposition (Betriebs- und oder Parkposition) gesichert werden kann.

### Lösung

Diese Aufgabe wird durch eine Anhängevorrichtung mit den Merkmalen des Anspruchs 1 gelöst. Vorteilhafte Ausgestaltungen sind Gegenstand der Unteransprüche.

Erfindungsgemäß ist vorgesehen, dass die Kugelstange an ihrem zweiten Ende um eine zweite Schwenkachse relativ zu dem Schwenklagerkörper schwenkbar und die Kugelstange zumindest in der Betriebsposition in dem zugeordneten oberen Totpunkt des Schwenklagerkörpers mit einer an ihrem zweiten Ende befindlichen Anschlagfläche unmittelbar an einer Anschlagfläche der Schwenklagereinheit blockierbar ist. Die vorgenannte Blockierung am Kugelstangenende bildet entweder den einzigen Blockierort oder nur einen Teil der weiter oben beschriebenen Blockiereinrichtung. Die Blockierung kann somit erfindungsgemäß lediglich am Kugelstangenende oder alternativ auch an mindestens zwei Orten, nämlich zum einen zwischen Schwenklagerkörper und Schwenklagereinheit mittels mindestens eines Blockierkörpers und zum anderen zwischen Kugelstangenende und Schwenklagereinheit bzw. einem anderen fahrzeugfesten Bauteil mittels der korrespondierenden Anschlagflächen erreicht werden.

Besonders vorteilhaft ist es in diesem Zusammmenhang, wenn die an dem zweiten Ende der Kugelstange befindliche, mindestens einemindestens einen Anschlagfläche wirkenden Kräfte ein größerer Hebelarm - bezogen auf die erste Schwenkachse - geschaffen, wodurch die in das Fahrzeug einzuleitenden Kräfte an dieser Stelle ebenso wie die daraus resultierende Flächenpressung im Bereich der sich berührenden Kontaktflächen (Anschlagflächen) geringgehalten werden können. Eine bevorzugte Ausführungsform besteht darin, dass die Kugelstange an dem der Kupplungskugel entgegengesetzten zweiten Ende einen freien Kragabschnitt aufweist, an dem die Anschlagfläche angeordnet ist. Ein freier Kragabschnitt eignet sich insbesondere dazu, in eine angepasste Tasche an der Schwenklagereinheit oder einem Fahrzeugteil unter Ausbildung eines Formschlusses einzugreifen und die Betriebskräfte sicher abzuleiten.

Die Kugelstange ist dafür beispielsweise zumindest an ihrem zweiten Ende derart ausgeformt, dass sie mit einer Ausnehmung an beziehungsweise in der Schwenklagereinheit zumindest teilweise formschlüssig korrespondiert. Die Ausnehmung der Schwenklagereinheit bildet also die mindestens eine Anschlagfläche, sodass die Kugelstange zumindest mit ihrem zweiten Ende an dieser anschlagen und insbesondere eingreifen kann. Das zweite Ende der Kugelstange ist dabei gerade derart ausgeformt, dass ein zumindest im Wesentlichen vollständig hergestellter Formschluss vorzugsweise ausschließlich in der Betriebsposition vorliegt. Mit anderen Worten nimmt der Formschluss zwischen dem zweiten Ende der Kugelstange immer weiter zu, solange sich der Schwenklagerkörper aufwärtsbewegt - und somit die Kugelstange zunehmend in die Betriebsposition überführt wird - bis der Schwenklagerkörper schließlich in dem oberen Totpunkt (zumindest in der Betriebsposition) angelangt ist. Der Formschluss ist also erst vollständig hergestellt, wenn der Schwenklagerkörper weitestmöglich nach oben bewegt wurde beziehungsweise ist und somit die Kugelstange in der Betriebsposition vorliegt.

In diesem Zusammenhang kann der Formschluss zwischen der Kugelstange und der Schwenklagereinheit beispielsweise auch derart hergestellt werden, dass die Kugelstange einen Vorsprung aufweist, der in eine damit korrespondierende Ausnehmung der Schwenklagereinheit eingreift. Gleichermaßen ist auch der umgekehrte Fall vorstellbar, nämlich, dass die Schwenklagereinheit den Vorsprung aufweist, während die Kugelstange mit der Ausnehmung ausgebildet ist. Außerdem ist es denkbar, dass die Ausnehmung beziehungsweise der Vorsprung jeweils kumulativ an der Kugelstange beziehungsweise der Schwenklagereinheit vorgesehen sind. Mit anderen Worten können die Kugelstange beziehungsweise die Schwenklagereinheit jeweils sowohl den Vorsprung als auch die Ausnehmung aufweisen, die vorzugsweise jeweils miteinander korrespondierend ineinander eingreifen können.

Die Kugelstange ist somit mittels ihres zweiten Endes an der Anschlagfläche der Schwenklagereinheit abgestützt. Hierbei ist der Formschluss zwischen der Kugelstange, insbesondere deren zweiten Ende, und der Schwenklagereinheit, insbesondere deren Anschlagfläche, dergestalt hergestellt, dass in der Betriebsposition ein relatives Bewegen der Kugelstange zu der Schwenklagereinheit unmöglich ist, wobei ergänzend noch eine weitere Blockierung an einem anderen Ort denkbar ist. Die Kugelstange wird also mittels des Formschlusses mit der Schwenklagereinheit zumindest in der Betriebsposition blockiert. Mit anderen Worten kann die Kugelstange vorzugsweise erst dann bewegt werden, wenn sich der Schwenklagerkörper abwärts bewegt, und somit ein "Herauslösen" der Kugelstange aus der Anschlagfläche zulässt. Hierdurch ergibt sich der Vorteil, dass die Kugelstange besonders sicher und zuverlässig in der Betriebsposition gehalten werden kann.

Gemäß einer besonders vorteilhaften Ausgestaltung der Erfindung ist vorgesehen, dass die Kugelstange in der Parkposition in dem oberen Totpunkt des Schwenklagerkörpers mit ihrem zweiten Ende an einer weiteren Anschlagfläche der Schwenklagereinheit blockierbar ist. Die Kugelstange ist an ihrem zweiten Ende also an zwei Seiten, nämlich an der Anschlagfläche und der weiteren Anschlagfläche abgestützt. Hierdurch ergibt sich der Vorteil, dass die Kugelstange mittels der mehreren Anschlagflächen den Formschluss besonders passgenau eingehen kann und somit besonders sicher und festsitzend abgestützt ist.

In einer weiteren besonders vorteilhaften Ausgestaltung der Erfindung ist vorgesehen, dass die Kugelstange schwerkraftbedingt ein solches Drehmoment um die zweite Schwenkachse ausübt, dass die Kupplungskugel bestrebt ist, sich in eine Position mit geringerer geodätischer Höhe abzusenken. Die Kupplungskugel drängt sozusagen aufgrund der Schwerkraft nach unten, möchte also gewissermaßen nach unten abklappen. Dies hat den Vorteil, dass sich die Kugelstange besonders einfach unter den Stoßfänger abklappen beziehungsweise unter diesem verschwenken lässt.

Ein weiterer Vorteil ergibt sich dann, wenn die Antriebseinrichtung einen Spindelantrieb und/oder der Schwenklagerköper oder ein darin oder daran angeordneter Betätigungskörper ein Innengewinde aufweist bzw. aufweisen, wobei die Antriebeinrichtung vorzugsweise von einem Elektromotor antreibbar ist. Es ist also vorgesehen, dass die Anhängevorrichtung nicht manuell, sondern automatisch durch die Antriebseinrichtung betrieben werden kann. Mittels der Antriebseinrichtung kann der Benutzer bzw. eine zwischengeschaltete Steuerungseinrichtung demzufolge steuern, wie der Spindelantrieb dessen Spindel bewegt, sodass dadurch der Schwenklagerkörper und somit auch die Kugelstange bewegt werden kann und in die gewünschte Position verbringbar ist. Hierdurch ergibt sich der Vorteil, dass die Anhängevorrichtung besonders komfortabel und bedarfsgerecht betrieben werden kann.

Die Erfindung besonders vorteilhaft ausgestaltend ist weiterhin vorgesehen, dass der Betätigungskörper in Richtung der ersten Schwenkachse relativ zu dem Schwenklagerkörper bewegbar ist, wobei vorzugsweise eine Relativbewegung ausschließlich vor Verlassen und/oder nach Erreichen des oberen Totpunkts des Schwenklagerkörpers in der Schwenklagereinheit stattfindet (Ver- und Entriegelungsvorgang). Der Betätigungskörper bewegt sich somit solange nur relativ zu dem (blockierten) Schwenklagerkörper bewegen, solange dieser in dem oberen Totpunkt verweilt, weil dessen Vertikalbewegung durch die Blockiereinrichtung verhindert ist. Dieser obere Totpunkt charakterisiert eine der Endstellungen, also die Betriebsposition und/oder die Parkposition, in denen es wünschenswert ist, die Anhängevorrichtung zu blockieren.

Ein weiterer Vorteil ergibt sich dann, wenn die Anschlagfläche der Kugelstange und die Anschlagfläche der Schwenklagereinheit bei der Blockierung in der Betriebsposition und/oder der Parkposition formschlüssig ineinander eingreifen. Eine Formschlussverbindung stellt eine einfach (weil wenige bewegliche Teile aufweisende) zu realisierende und im Wesentlichen verschleißfrei arbeitende, aufhebbare Verbindung dar.

Die Erfindung weiter ausgestaltend, ist vorgesehen, dass in der Betriebsposition und/oder der Parkposition zwei einander gegenüberliegende, mit dem zweiten Ende der Kugelstange zusammenwirkende Anschlagflächen der Schwenklagereinheit eine Verschwenkung der Kugelstange um die erste Schwenkachse in beide Drehrichtungen unterbinden. Die gegenüberliegenden Anschlagflächen begrenzen somit vorzugsweise eine in der Schwenklagereinheit befindliche Tasche bzw. zwei Taschen (für Betriebs- und Parkstellung), in die vorzugsweise der freie Kragabschnitt der Kugelstange in der Betriebsund/oder Parkposition eingetaucht und formschlüssig blockiert ist. Diese Art der Blockierung soll insbesondere eine Festlegung der Kugelstange in Bezug auf eine Rotation um die erste Schwenkachse sicherstellen.

Vorzugsweise ist an der Schwenklagereinheit oder an einem fahrzeugfesten Bauteil auch noch mindestens eine dritte Anschlagfläche vorhanden, die mit mindestens einer dritten Anschlagfläche an dem freien Kragabschnitt der Kugelstange zusammenwirkt. Die dritte Anschlagfläche ist dabei vorzugsweise an einer Oberseite des freien Kugelstangenendes angeordnet und mit einer ungefähr horizontal oder schräg ausgerichteten dritten Anschlagfläche der Schwenklagereinheit bzw. an dem Fahrzeugbauteil in Kontakt und erlaubt vor allem die Ableitung von in vertikale Richtung wirkenden Betriebskräften.

In einer weiteren besonders vorteilhaften Ausgestaltung der Erfindung ist vorgesehen, dass eine Ausnehmung in der Schwenklagereinheit, betrachtet in einem Querschnitt durch diese, zumindest im Wesentlichen eine V-Form beziehungsweise eine Keilform bildet, wobei die Ausnehmung zumindest die Anschlagfläche der Schwenklagereinheit umfasst. In der Praxis hat sich gezeigt, dass mittels dieser Form ein besonders wirksamer Formschluss zwischen der Kugelstange und der Schwenklagereinheit hergestellt werden kann. Durch diese Form ist es der Kugelstange möglich, einerseits - insbesondere bedingt durch die Keilform - besonders einfach und geschmeidig in die Ausnehmung hineinzugleiten beziehungsweise daraus hinauszugleiten und andererseits besonders formschlüssig und somit sicher in dieser zu sitzen. Außerdem handelt es sich hierbei um eine einfache und somit zeit- und kostengünstig herstellbare Form. Hierdurch ergibt sich der Vorteil, dass die Anhängevorrichtung besonders kosteneffizient herstellbar ist.

Gemäß einer weiteren besonders vorteilhaften Ausgestaltung ist vorgesehen, dass eine weitere Blockierung am Schwenklagerkörper in der Schwenklagereinheit durch einen Blockierkörper bewerkstelligt wird. Zusätzlich zu einem Eingreifen der Kugelstange in beziehungsweise an der Anschlagfläche ist die Kugelstange also mittels des Blockierkörpers gesichert. Hierdurch ergibt sich vorteilhafterweise eine redundante oder die Blockierung vervollständigende Sicherung der Kugelstange, sodass die Anhängevorrichtung besonders sicher und zuverlässig betreibbar ist.

### Ausführungsbeispiel

Die Erfindung ist nachstehend anhand zweier Ausführungsbeispiels, die in den Figuren dargestellt sind, näher erläutert. Es zeigt:
- Fig. 1:: eine schematische Ansicht einer erfindungsgemäßen Anhängevorrichtung, montiert an einem Fahrzeug und in einer Betriebsposition;
- Fig. 2:: wie Figur 1, aber in einer Parkposition;
- Fig. 3:: eine schematische Schnittansicht von der Seite, gemäß Figur 1;
- Fig. 4:: eine schematische Schnittansicht von der Seite, hier in einer Zwischenposition;
- Fig. 5:: eine schematische Schnittansicht von der Seite, gemäß Figur 2;
- Fig. 6:: eine schematische Detailansicht der Anhängevorrichtung;
- Fig. 7:: eine schematische Ansicht eines Schwenklagerkörpers;

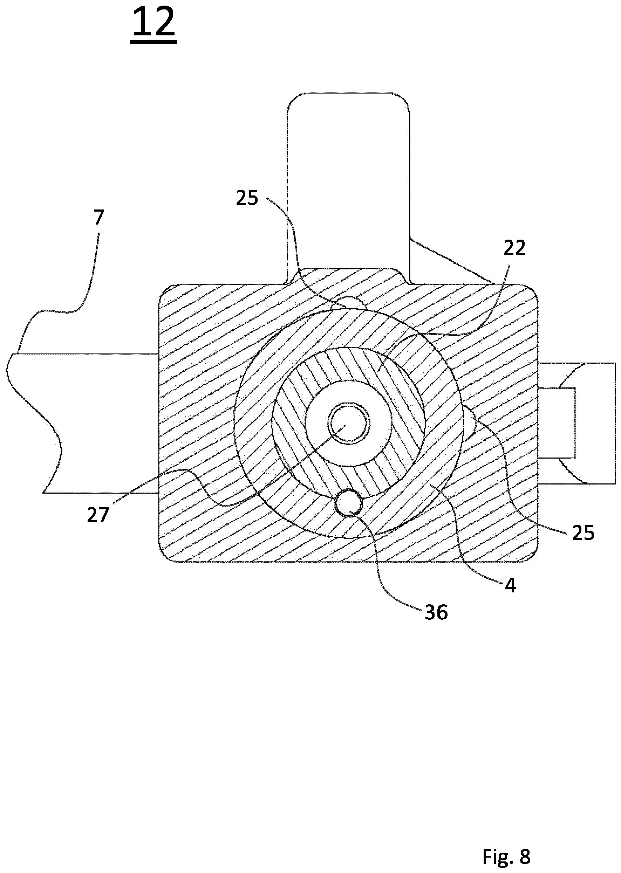

- Fig. 8:: eine schematische Schnittansicht von oben auf eine Schwenklagereinheit gemäß einer ersten Schnittebene;
- Fig. 9:: eine schematische Übersicht verschiedener Zustände des Schwenklagerkörpers während eines Betriebes der Anhängevorrichtung;
- Fig. 10:: eine schematische Schnittansicht von oben auf die Schwenklagereinheit, gemäß einer zweiten Schnittebene;
- Fig. 11:: eine schematische Ansicht einer Nut einer Kulissenbahn;
- Fig. 12:: eine schematische Ansicht der erfindungsgemäßen Anhängevorrichtung, montiert an dem Fahrzeug und in der Betriebsposition gemäß einer weiteren Ausgestaltung;
- Fig. 13:: wie Figur 12, aber in der Parkposition;
- Fig. 14:: eine schematische Schnittansicht von der Seite, gemäß Figur 12;
- Fig. 15:: wie Figur 14, aber in einer Zwischenposition;
- Fig. 16:: eine schematische Schnittansicht von der Seite, gemäß Figur 13;
- Fig. 17:: wie Figur 16, aber in der Zwischenposition;
- Fig. 18:: eine schematische Ansicht der Schwenklagerkörpers in zwei verschiedenen Zwischenpositionen;

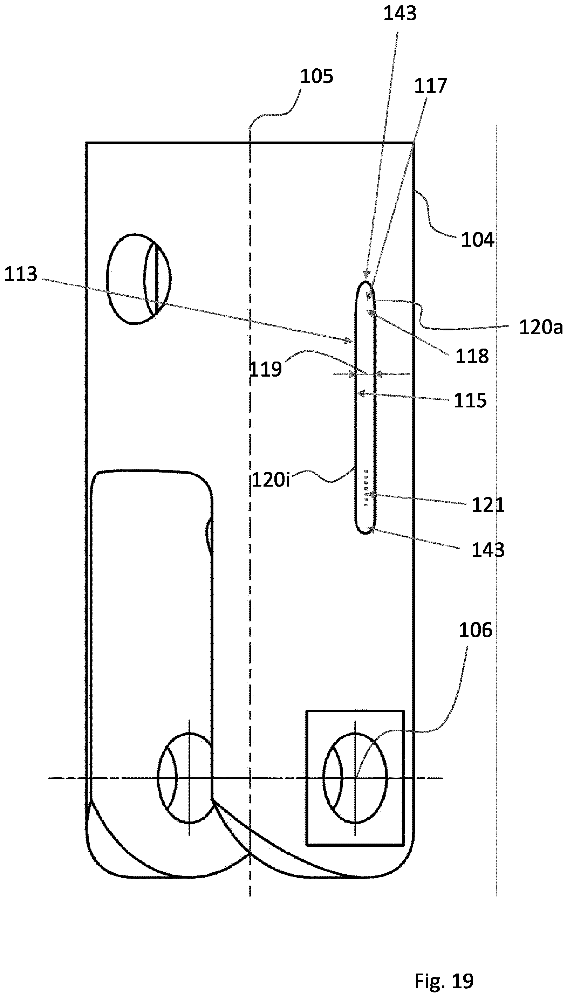

- Fig. 19:: eine perspektivische Ansicht des Schwenklagerkörpers;
- Fig. 20:: eine schematische Schnittansicht der Schwenklagereinheit von oben;
- Fig. 21:: eine isometrische Ansicht der Schwenklagereinheit und
- Fig. 22:: eine schematische Ansicht der Nut der Kulissenbahn.

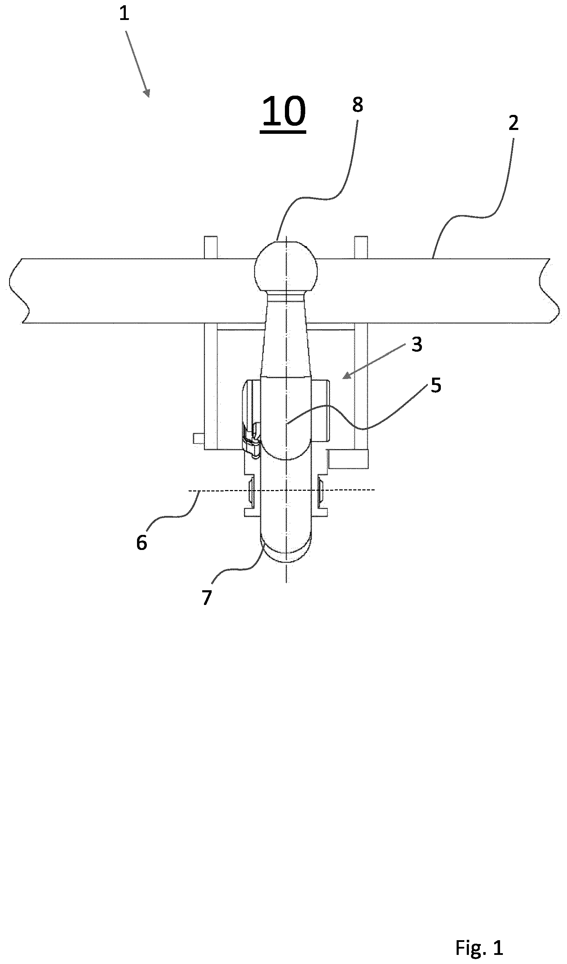

Figur 1 zeigt in einer schematischen Ansicht eine erfindungsgemäße Anhängevorrichtung 1, wobei diese zumindest mittelbar an einem Fahrzeugteil 2 eines Fahrzeugs montiert ist und sich in einer Betriebsposition 10 befindet. Bei dem Fahrzeugteil 2 handelt es sich vorliegend um einen hinteren Querträger des Fahrzeugs. Der Querträger kann entweder bereits baulich, das heißt von Werk aus, als Teil des Fahrzeugs, insbesondere dessen Karosserie, oder als Teil eines Lieferumfangs der Anhängevorrichtung vorgesehen sein. Die Schwenklagereinheit 3 ist vorliegend beispielsweise mittels einer Schraubenverbindung an einem Halteblech befestigt, welches wiederum mit dem einfach auch als Querträger bezeichneten Fahrzeugteil 2 verschweißt ist. Der Querträger 2 ist wiederum mit dem Fahrzeug, insbesondere dessen Karosserie, verbunden. Mit anderen Worten ist die Anhängevorrichtung 1 in Figur 1 zumindest im Wesentlichen gemäß ihrem vollständig hergestellten Zustand dargestellt.

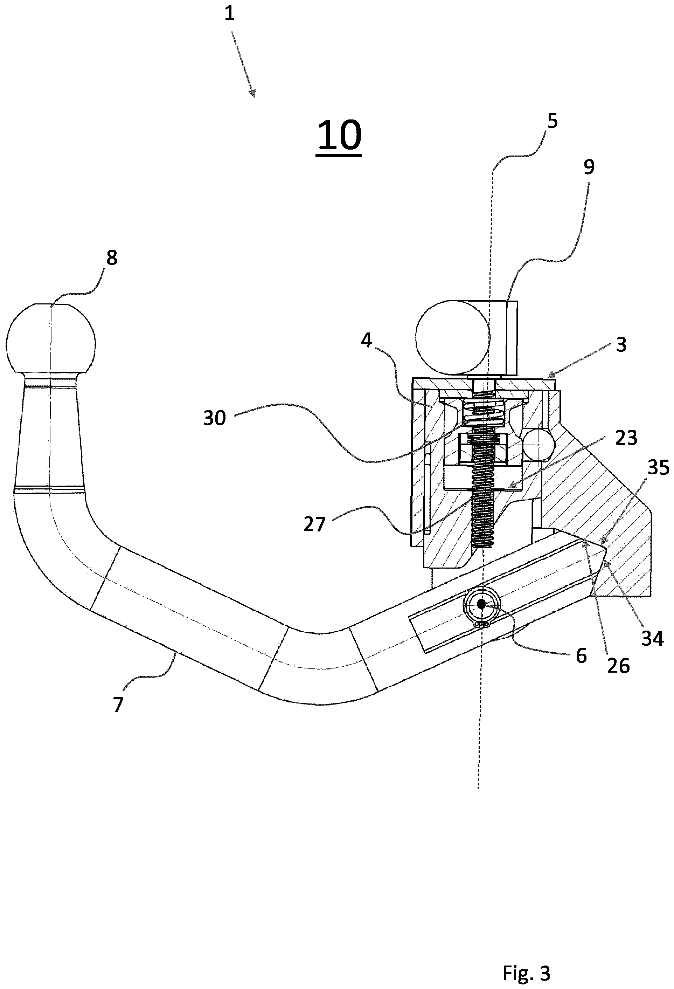

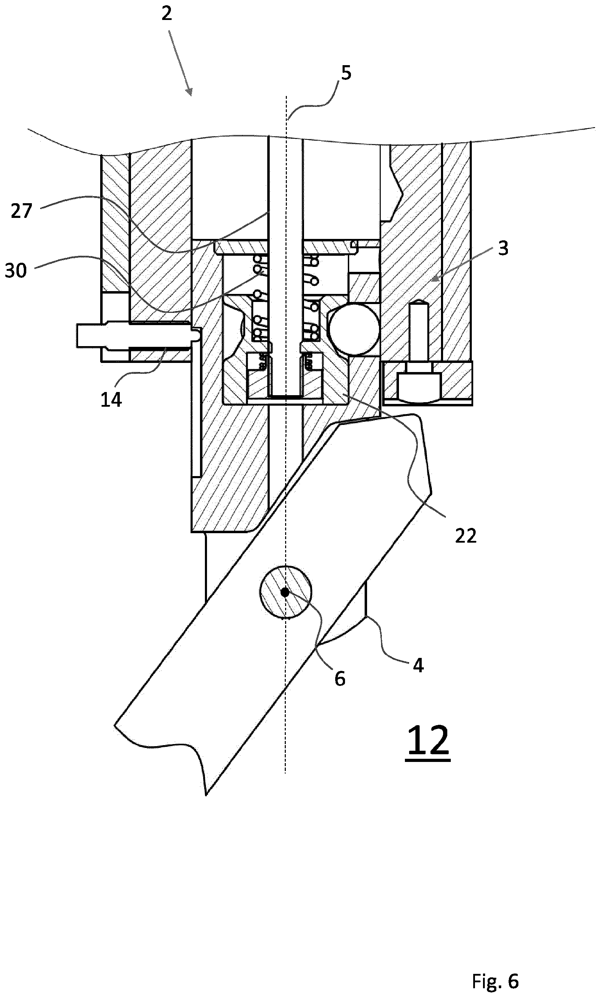

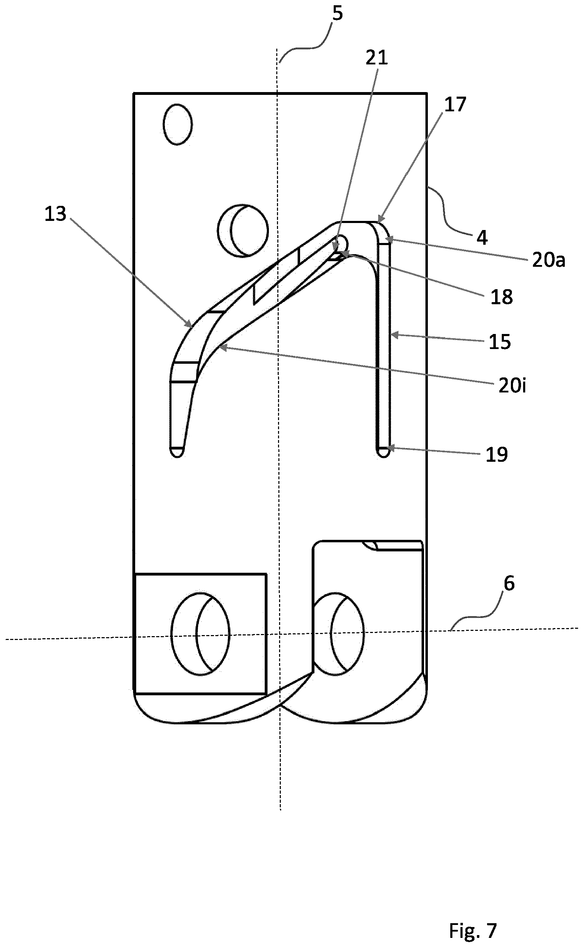

Die Anhängevorrichtung 1 umfasst eine Schwenklagereinheit 3, die in Kraft übertragender Weise mit dem Fahrzeugteil 2 verbunden ist. Die Schwenklagereinheit 3 weist eine vertikal verlaufende erste Schwenkachse 5 auf, wie beispielsweise in Figur 1 dargestellt ist. Außerdem umfasst die Anhängevorrichtung einen Schwenklagerkörper 4. Dieser ist, wie die Figuren 3 bis 6 besonders deutlich zeigen, in beziehungsweise an der Schwenklagereinheit 3 gelagert. Hierbei wird durch den Schwenklagerkörper 4 eine zweite Schwenkachse 6 definiert, die zumindest im Wesentlichen horizontal verläuft. Diese zweite Schwenkachse 6 ist beispielsweise in den Figuren 6 und 7 dargestellt. Insbesondere Figur 7 zeigt besonders deutlich, dass die erste Schwenkachse 5 und die zweite Schwenkachse 6 senkrecht zueinander stehen.

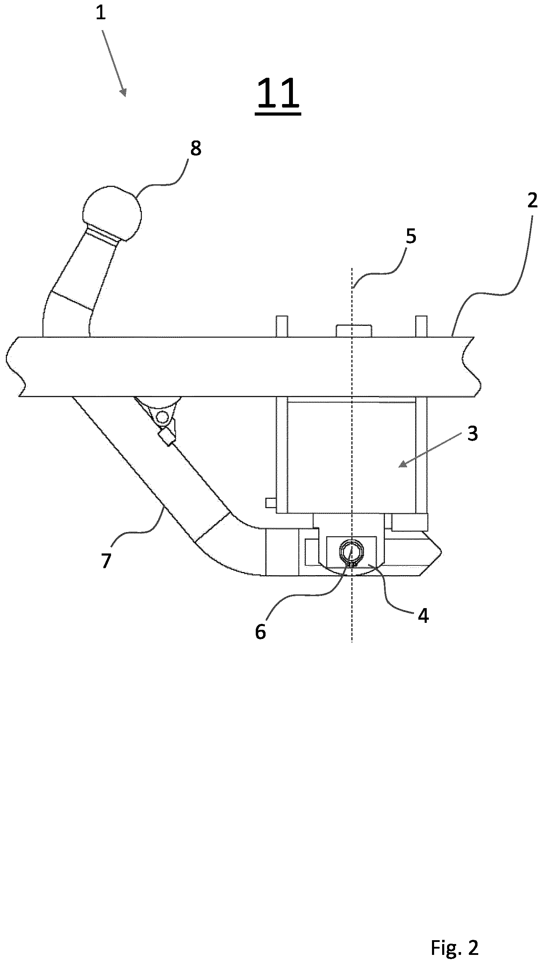

Die Anhängevorrichtung 1 umfasst außerdem eine Kugelstange 7, die an einem Ende eine Kupplungskugel 8 aufweist. Dies ist beispielsweise den Figuren 2 bis 4 zu entnehmen. Mittels der Kupplungskugel 8 kann ein Zusatzgerät, beispielsweise ein Anhänger oder ein Fahrradträger, an das Fahrzeug angekuppelt werden. Dazu wird beispielsweise ein mit der Kupplungskugel 8 korrespondierendes Kupplungsstück des Zusatzgeräts auf den Kugelkopf 8 aufgesetzt. Mit anderen Worten kann das Zusatzgerät durch Einhängen an beziehungsweise auf die Kupplungskugel 8 zumindest mittelbar mit dem Fahrzeug verbunden werden.

Die Kupplungsstange 7 ist schwenkbar und gelenkig mit dem Schwenklagerkörper 4 verbunden. Mit anderen Worten kann die Kugelstange 7 derart um die zweite Schwenkachse 6 verschwenkt werden, dass verschiedene Positionen erreichbar sind, wie beispielsweise in Zusammenschau der Figuren 3 bis 5 deutlich wird.

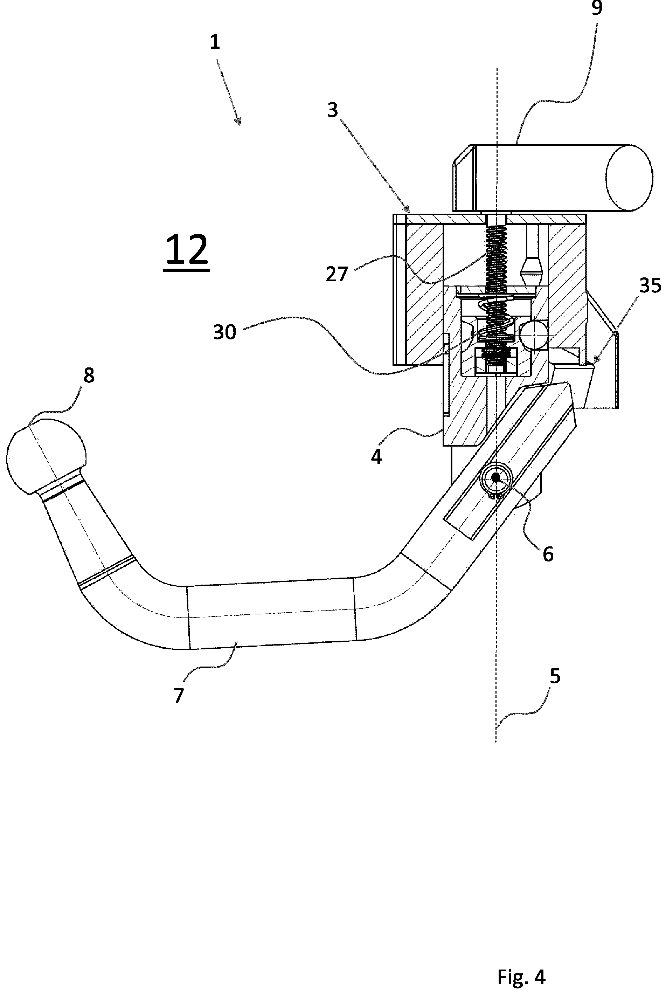

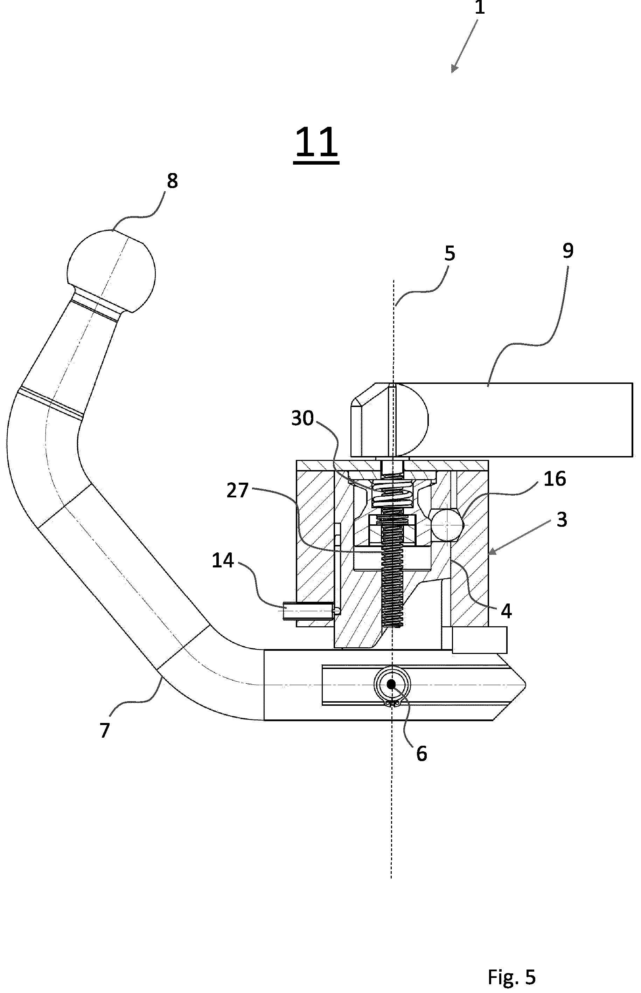

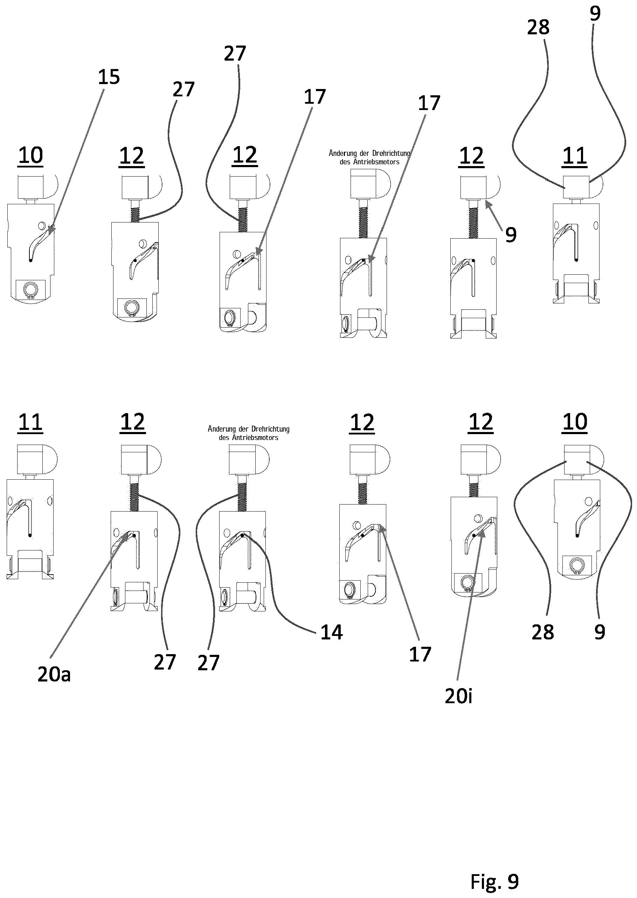

Die Anhängevorrichtung 1 weist weiterhin eine Antriebsvorrichtung 9 auf. Die Antriebsvorrichtung 9 ist vorliegend in Form eines Spindelantriebs ausgebildet, der beispielsweise elektrisch betreibbar ist. Hierbei umfasst die einfach auch als Spindelantrieb bezeichnete Antriebsvorrichtung 9 eine Spindel 27 sowie ein Getriebe 28. Dies ist beispielsweise in Figur 9 dargestellt. Das Getriebe 28 ist verzichtbar, sofern die Antriebsvorrichtung 9 ein ausreichend großes Drehmoment bereitstellen kann. Mittels der Antriebseinrichtung 9 ist die Kugelstange 7 von einer Betriebsposition 10 in eine Parkposition 11 überführbar und umgekehrt. Die Betriebsposition 10, in der sich die Kupplungskugel 8 frei zugänglich hinter dem Heck des Fahrzeugs befindet, ist beispielsweise in Figur 1 oder 3 dargestellt. Die Parkposition 11, in der sich die Kupplungskugel 8 verdeckt unterhalb des Fahrzeugs und insbesondere hinter dem Stoßfänger befindet, ist beispielsweise in Figur 2 oder 5 dargestellt. In diesem Zusammenhang kann die Kupplungskugel 8 in Abhängigkeit von einer Bauweise des Querträgers 2 vor, hinter und/oder unter diesem angeordnet sein. Während einer Überführung der Kupplungsstange 7 zwischen der Parkposition 11 und der Betriebsposition 10, beziehungsweise umgekehrt, durchläuft die Kupplungsstange 7 außerdem mindestens eine Zwischenposition 12. Dies ist beispielsweise in Figur 4, Figur 6 oder Figur 9 dargestellt.

Außerdem umfasst die Anhängevorrichtung 1 eine Kulissenführung 13, mittels der der Schwenklagerkörper 4 während der Überführung von der Betriebsposition 10 in die Parkposition 11 sowie umgekehrt sowohl translatorisch in vertikale Richtung als auch rotatorisch um die vertikal ausgerichtete erste Schwenkachse 5 bewegbar ist.

Hierbei sind vorliegend ein Kulissenstein 14 an der Schwenklagereinheit 3 und eine mit dem Kulissenstein 14 zusammenwirkende Kulissenbahn 15 in dem Schwenklagerkörper 4 angeordnet. Die Kulissenführung 13 umfasst also sowohl die Kulissenbahn 15 als auch den Kulissenstein 14.

Weiterhin ist mindestens eine Blockiereinrichtung 16 vorgesehen, mittels welcher der Schwenklagerkörper 4 relativ zu der Schwenklagereinheit 3 und die Kugelstange 7 relativ zu dem Schwenklagerkörper 4 oder der Schwenklagereinheit 3 blockierbar sind. Mit anderen Worten ist der Schwenklagerkörper 4 insbesondere in der Parkposition 11 beziehungsweise der Betriebsposition 10 mittels der Blockiereinrichtung 16 blockierbar beziehungsweise arretierbar.

Der Kulissenstein 14 ist in eine Richtung entlang der Bahn, d. h. in eine Bahnrichtung, relativ zu der Kulissenbahn bewegbar. Dabei bewegt sich der Schwenklagerkörper 4 relativ zu der fahrzeugfesten Schwenklagereinheit 3, wobei eine Zwangskopplung über das Kulissengetriebe vorliegt. Außerdem weist die Kulissenbahn 15 in einem Umkehrabschnitt 17, in dem sich eine vertikale Bewegungsrichtung des Schwenklagerkörpers 4 umkehrt, eine Stufe 18 auf. Diese ist besonders deutlich in Figur 7 dargestellt. Diese Stufe 18 ist von dem Kulissenstein 14 bei der Überführung der Kugelstange 7 von der Parkposition 11 in die Betriebsposition 10 überfahrbar, wodurch der Kulissenstein 14 sich zumindest mit einer zu der Bahnrichtung senkrechten Bewegungskomponente die Stufe 18 hinab bewegt, um dann an einer Stufenbasis anzuliegen oder zu dieser einen kleinen Abstand aufzuweisen.

Um die Anhängevorrichtung 1 beziehungsweise die Kugelstange 7 von der Parkposition 11 in die Betriebsposition 10 beziehungsweise umgekehrt verschwenken zu können, muss die Kugelstange 7 also einerseits absenkbar beziehungsweise anhebbar und andererseits seitlich verschwenkbar sein. Dieser Hergang wird besonders in Zusammenschau der Figuren 1 und 2 deutlich. Während die Kugelstange 7 gemäß Figur 1 und in der Betriebsposition 10 von hinten gesehen mittig vor dem einfach auch als Querträger bezeichneten Fahrzeugteil 2 angeordnet ist, befindet sich die Kugelstange 7 gemäß Figur 2 und in der Parkposition von hinten gesehen hinter dem Querträger 2. Demzufolge muss die Kugelstange 7 gewissermaßen unter dem Stoßfänger "abtauchen" beziehungsweise "hinwegtauchen" können. Hierfür ist es erforderlich, die Kugelstange 7 abzusenken beziehungsweise abklappen zu können. Diese Zwischenposition 12 ist in Figur 4 dargestellt.

Die einfach auch als Spindelantrieb bezeichnete Antriebseinrichtung 9 ist mit einem Betätigungskörper 22 verbunden. Vorliegend ist die Spindel mit einem Außengewinde ausgebildet und der Betätigungskörper 22 mit einem damit korrespondierenden Innengewinde. Durch diese Ausgestaltung fungiert der Betätigungskörper 22 gewissermaßen als Mutter. Weiterhin ist um die Spindel 27 herum eine Federelement 30, vorliegend beispielsweise in Form einer Druckfeder, umhüllt. Mit anderen Worten ist die Spindel 27 gewissermaßen durch das Federelement 30 hindurchgesteckt, mithin in diesem angeordnet. Die Spindel 27 und das Federelement 30 sind folglich zumindest im Wesentlichen koaxial angeordnet. Hierbei ist das Federelement 30 derart angeordnet, dass ein Ende zumindest im Wesentlichen an dem Schwenklagerkörper 4 angeordnet ist. Außerdem ist ein gegenüberliegendes Ende an dem Betätigungskörper 22 angeordnet. Mit anderen Worten ist das Federelement 30 beidseitig abgestützt, nämlich einerseits (nach oben) durch den Schwenklagerkörper 4 und andererseits (nach unten) durch den Betätigungskörper 22. Die Figuren 3 bis 5 zeigen dies besonders deutlich.

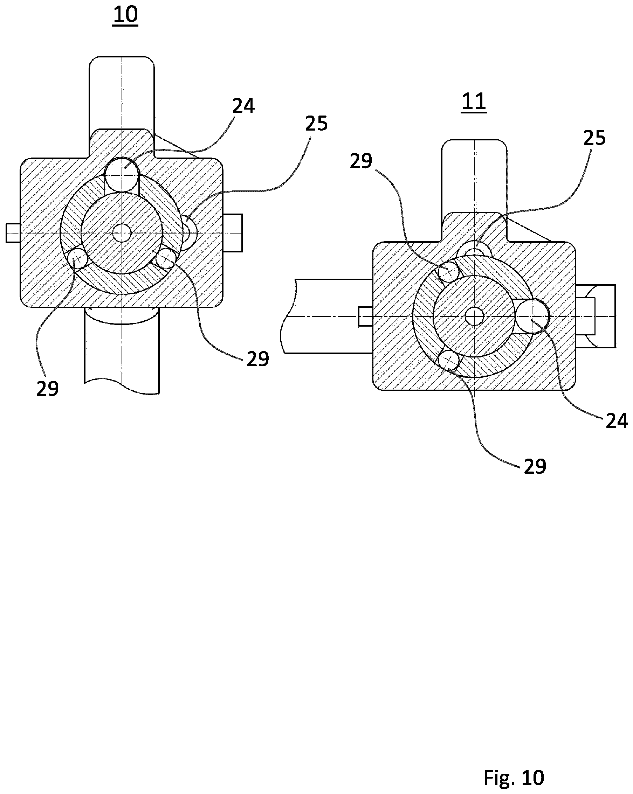

Durch Betätigen des Spindelantriebs 9 kann der Betätigungskörper 22 höhenverstellt werden. Hierbei ist der Betätigungskörper 22 in der Betriebsposition 10 oben an dem Spindelantrieb 9 angeordnet. Dies ist beispielsweise in Figur 3 dargestellt. Im Folgenden wird mittels des Spindelantriebs 9 der Betätigungskörper 22 immer weiter vertikal entlang der ersten Schwenkachse 5 nach unten bewegt. Hierbei ist der Betätigungskörper 22 vorliegend in dem Schwenklagerkörper 4 angeordnet, wobei der Betätigungskörper 22 zu einem Anschlag 23 des Schwenklagerkörpers 4 beabstandet ist. Weiterhin ist ein Passstift 36 vorgesehen, mittels welchem der Schwenklagerkörper 4 und der Betätigungskörper 22 miteinander verbunden sind. Der Passstift 36 ist dabei derart an beziehungsweise in dem Schwenklagerkörper 4 und/oder dem Betätigungskörper 22 angeordnet, dass diese relativ zueinander drehblockiert sind. Dies ist beispielsweise in der Figur 10 erkennbar. Allerdings ist eine relative Bewegung in axialer Richtung zueinander weiterhin möglich. Mit anderen Worten bewirkt der Betätigungskörper 22 erst dann eine Bewegung der Schwenklagerkörpers 4, wenn der Betätigungskörper 22 eine radial nach innen gerichtete Bewegung des Blockierkörpers erlaubt und somit den Formschluss zwischen Schwenllagerkörper 4 und Schwenklagereinheit 3 aufhebt.

Der Betätigungskörper 22 folgt dabei nach Freigabe der Blockiereinrichtung aufgrund seines Eigengewichts dem Betätigungskörper 22 bei seiner Abwärtsbewegung (und auch bei der Aufwärtsbewegung). Dabei stützt sich der Schwenklagerkörper über das Federelement 30 auf dem Schwenklagerkörper ab. Die Steifigkeit des Federelements 30 ist so bemessen, dass dieses das Eigengewicht der Kugelstange tragen kann, ohne dabei auf Block komprimiert zu werden.

Gegenüber der in Figur 3 dargestellten Betriebsposition 10, in welcher sich die Kupplungskugel 8 zumindest im Wesentlichen auf gleicher Höhe wie der Querträger 2 befindet, ist die Kupplungskugel 8, wie in Figur 4 dargestellt, bereits deutlich in Bezug auf den Querträger 2 abgesenkt. In diesem Zusammenhang bewegt sich die Kugelstange 7 außerdem aus dem Sicherungsanschlag 26 heraus. Die ist in Figur 4 dargestellt.

Um nun neben dieser rein vertikalen Bewegung eine Rotationsbewegung ausführen zu können, ist der Schwenklagerkörper 4 mit der Kulissenführung 13 versehen. Hierbei umfasst der Schwenklagerkörper 4 die zumindest teilweise ringsherum um diesen verlaufende Kulissenbahn 15. Die Kulissenbahn 15 ist vorliegend in Form einer Nut ausgebildet. In die Kulissenbahn 15 greift der Kulissenstein 14 ein. Dieser ist vorliegend beispielsweise in Form eines Stiftes ausgebildet und in der Schwenklagereinheit 3 angeordnet, über deren innere Mantelfläche er hervorragt. Die Figuren 5 und 6 zeigen dies besonders deutlich. Mit anderen Worten fährt der Kulissenstein 14 die Kulissenbahn 15 ab und gibt somit eine Drehrichtung des Schwenklagerkörpers 4 vor. Hierbei steht die Schwenklagereinheit 3 still, wohingegen sich der Schwenklagerkörper 4 relativ zu dieser bewegt.

Hierbei weist die Kulissenbahn 15 eine Breite 19 sowie eine äußere Wandung 20a und eine innere Wandung 20i auf. In diesem Zusammenhang ist vorliegend vorgesehen, dass der Kulissenstein 14 zumindest teilweise entsprechend der Breite 19 in die Kulissenbahn 15 hineinragt. Mit anderen Worten steht der Kulissenstein 14 zumindest mit einem Teil der Breite 19 in der Kulissenbahn 15, sodass er in diese eingreifen kann. Während der Bewegung kommt der Kulissenstein 14 daher in Kontakt mit der Wandung 20a beziehungsweise 20i. Dies ist in den Figuren 7 und 9 dargestellt.

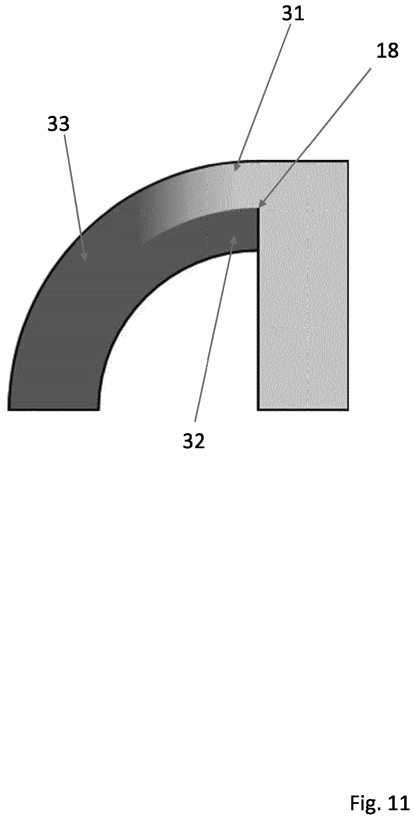

Außerdem weist die Kulissenbahn 14 eine Stufe 18 mit einer Tiefe 21 auf, wie Figur 7 besonders deutlich zeigt. Entsprechend weist die Kulissenbahn 14 im Bereich der Stufe 18 eine Tiefstelle 32, mithin "unten" an der Stufe 18, und eine Hochstelle 31, mithin "oben" an der Stufe 18, auf. Die Kulissenbahn 14 weist weiterhin einen Neigungsabschnitt 33 auf, welcher derart ausgebildet ist, dass er eine höhenmäßige Differenz zwischen der Tiefstelle 32 und der Hochstelle 31 überbrücken kann. Mit anderen Worten verbindet der Neigungsabschnitt 33 die Tiefstelle 32 mit der Hochstelle 31 beziehungsweise umgekehrt. Wieder mit anderen Worten ermöglicht der Neigungsabschnitt 33 es, von der Tiefstelle 32 zur Hochstelle aufwärts zu fahren beziehungsweise von der Hochstelle 31 zur Tiefstelle 32 abwärts zu fahren. Dies ist in Figur 11 erkennbar.

Diese Stufe 18 ist notwendig, um den Kulissenstein 14 bei einer Umkehr der Drehrichtung der Spindel 27 mittels des Spindelantriebs 9, wie dies in Figur 9 gezeigt ist, gewissermaßen innerhalb der Kulissenbahn 14 "lenken" zu können. Die Stufe besitzt somit eine Weichenfunktion, allerdings ohne dass hierfür ein mechanisch bewegbares Bauteil, wie etwa eine Weichenzunge, nötig wäre. Dieses Verhalten ist dem unteren Teil der Figur 9 zu entnehmen. Die Anhängevorrichtung 1 wird von der Parkposition 11, wie dies unten links in Figur 9 dargestellt ist, in die Betriebsposition 10, wie dies unten rechts in Figur 9 dargestellt ist, überführt. Hierbei würde sich der Kulissenstein 14 ohne weitere Einwirkung an der äußeren Wandung 20a bewegen. Daher wird der Kulissenstein 14 mittels der Stufe 18 an die innere Wandung 20i gelenkt.

In Figur 11 ist außerdem deutlich zu erkennen, dass die Stufe 18 im Bereich zwischen Tiefstelle 32 und Hochstelle 31 angeordnet ist, mithin gewissermaßen zwischen beiden eine Grenze bildet.

Um die Anhängevorrichtung 1 sowohl in der Parkposition 11 als auch in der Betriebsposition 10 zu sichern, ist weiterhin die Blockiereinrichtung 16 vorgesehen. Die Blockiereinrichtung 16 umfasst einen Blockierkörper 24, der vorliegend in Form einer Kugel ausgestaltet ist. Außerdem umfasst die Schwenklagereinheit 3 eine mit dem Blockierkörper 24 korrespondierende Aussparung 25. Dies ist außerdem in Figur 10 in einer schematischen Schnittansicht von oben auf die Schwenklagereinheit 3 dargestellt. Mit anderen Worten kann der Blockierkörper 24 zumindest teilweise in die Aussparung 25 eingreifen. Dies ist beispielsweise in Figur 5 dargestellt. Hierbei ist der Blockierkörper 24 in dem Schwenklagerkörper 4 angeordnet und bewegt sich entsprechend mit diesem. Mit anderen Worten wird der Blockierkörper 24 bei einer Aufwärts- oder Abwärtsbewegung in Bezug auf die erste Schwenkachse 5 entsprechend mit hoch beziehungsweise runter bewegt. Wieder mit anderen Worten kommt der Blockierkörper 24 genau dann in Eingriff mit der Aussparung 25, wenn sich beide auf derselben Höhe befinden. Ist der Blockierkörper 24 in der Aussparung 25 angeordnet, ist die Anhängevorrichtung 1 blockiert.

Weiterhin umfasst die Anhängevorrichtung 1 vorliegend zwei Stützkörper 29, wie beispielsweise in Figur 10 erkennbar ist. In Figur 10 ist außerdem besonders gut erkennbar, wie der Stützkörper 29 in der - hier zumindest im Wesentlichen in Form einer Hülse ausgebildeten - Schwenklagereinheit 3 angeordnet ist. Die Stützkörper 29 sind hierbei in dem Schwenklagerkörper 4 derart angeordnet, dass sie sich gewissermaßen an einer Innenseite der hülsenförmigen Schwenklagereinheit 3 abstützen beziehungsweise umgekehrt. Die Stützkörper 29 dienen folglich dazu, den Betätigungskörper 22 sowie den Schwenklagerköper 4 innerhalb von der Schwenklagereinheit 3 zu führen und/oder abzustützen.

Wie Figur 10 deutlich zeigt, sind die Stützkörper 29 - in einer Ebene senkrecht zu der ersten Schwenkachse 5 betrachtet - zu dem Blockierkörper 24 vorliegend zumindest im Wesentlichen um genau 120° versetzt angeordnet. Der Blockierkörper 24 und die Stützkörper 29 sind demzufolge auf einem Kreis, der als Mittelpunkt die erste Schwenkachse 5 hat, in demselben Abstand zueinander angeordnet. Mit anderen Worten sind der Blockierkörper 24 und die Stützkörper 29 gleichmäßig, mithin drehsymmetrisch um die erste Schwenkachse 5, angeordnet.

Die Stützkörper 29 sind in eine Führungsrichtung mit mindestens einer Komponente radial zu der ersten Schwenkachse 5 bewegbar, wobei die Stützkörper 29 mittels des Betätigungskörpers 22 in der Führungsrichtung bewegbar sind. Vorliegend erfolgt die Bewegung sogar in exakt radiale Richtung. Diese radiale Bewegungsrichtung ermöglicht es den Stützkörpern 29, Kräfte, beispielsweise von der Schwenklagereinheit 3, aufzunehmen. Mit anderen Worten können die Stützkörper 29 beispielsweise von der Schwenklagereinheit 3 ansonsten zumindest im Wesentlichen unmittelbar auf den Schwenklagerkörper 4 einwirkende Kräfte aufnehmen, mithin absorbieren. Hierdurch werden die Kräfte, insbesondere von der Schwenklagereinheit 3 auf den Betätigungskörper 22 sowie den Schwenklagerkörper 4 wirkend beziehungsweise umgekehrt, verteilt.

Vorliegend ist der Betätigungskörper 22 zumindest im Bereich seiner Druckfläche konisch ausgestaltet. Mittels der Druckfläche des Betätigungskörpers 22 sind die Stützkörper in der Führungsrichtung bewegbar. Dies ist derart vorstellbar, dass die Stützkörper 29 gewissermaßen von der Druckfläche in Führungsrichtung hochgedrückt werden. Hierbei sind die Stützkörper 29 in der Freigabestellung des Betätigungskörpers 22 außer Kontakt mit der Schwenklagereinheit 3. Außerdem sind mittels der Stützkörper 29 in der Blockierstellung des Betätigungskörpers 22 ausschließlich radial zu der ersten Schwenkachse gerichtete Druckkräfte von dem Betätigungskörper 22 auf die Schwenklagereinheit 3 übertragbar. Dies liegt daran, dass die innere Mantelfläche der Schwenklagereinheit 3 an der Kontaktstelle der Stützkörper exakt zylindrisch ausgeführt ist und insbesondere keinerlei Ausnehmungen aufweist, in die die Stützkörper zur Bildung eines Formschlusses eintreten könnten

Figur 9 zeigt in einer schematischen Übersicht verschiedene Zustände des Schwenklagerkörpers 4 während eines Betriebes der Anhängevorrichtung 1. Hierbei ist deutlich erkennbar, dass der Spindelantrieb 9 beziehungsweise dessen in Axialrichtung fahrzeugfeste Spindel 27 im Laufe des Betriebs unterschiedlich weit an der Oberseite des Schwenklagerkörpers 4 aus diesem herausragt. Sowohl in der Parkposition 11 als auch in der Betriebsposition 10 ragt die Spindel 27 aus dem Betätigungskörper 22 hervor. Da der Betätigungskörper 22 den Schwenklagerkörper 4 gewissermaßen "mitnimmt", ist auch der Schwenklagerkörper 4 in der Betriebsposition 10 beziehungsweise der Parkposition 11 zumindest nicht wesentlich relativ zu der Spindel 27 ausgefahren. Demgegenüber ist der Schwenklagerkörper 4 in der Zwischenposition 12 deutlich relativ zu der Spindel 27 beabstandet, mithin gegenüber dieser ausgefahren. Figur 4 zeigt dies. Mit anderen Worten wird der Schwenklagerkörper 4 nur ausgefahren, um die Anhängevorrichtung 1 von der Parkposition 11 in die Betriebsposition 10 zu verbringen beziehungsweise umgekehrt. Mit anderen Worten ist der Schwenklagerkörper 4 ausschließlich in der jeweiligen Zwischenposition 12 (Umkehrstellung/-position) ausgefahren, wie auch aus Figur 9 deutlich hervorgeht.

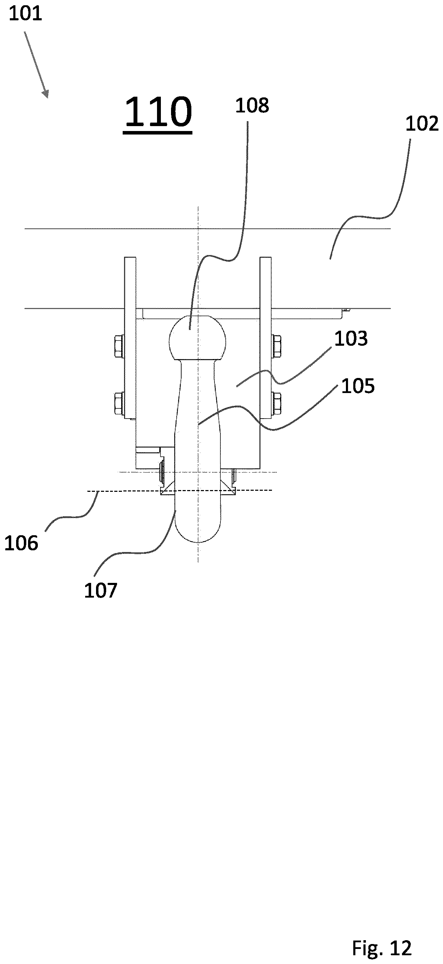

Figur 12 zeigt in einer schematischen Ansicht eine erfindungsgemäße Anhängevorrichtung 101 gemäß einer weiteren Ausgestaltung, wobei diese zumindest mittelbar an dem Fahrzeugteil 102 des Fahrzeugs montiert ist und sich in der Betriebsposition 110 befindet. Bei dem Fahrzeugteil 102 handelt es sich vorliegend um einen hinteren Querträger des Fahrzeugs. Der Querträger kann entweder bereits baulich, das heißt von Werk aus, als Teil des Fahrzeugs, insbesondere dessen Karosserie, oder als Teil eines Lieferumfangs der Anhängevorrichtung 101 vorgesehen sein. Die Schwenklagereinheit 103 ist vorliegend beispielsweise mittels einer Schraubenverbindung an einem Halteblech befestigt, welches wiederum mit dem einfach auch als Querträger bezeichneten Fahrzeugteil 102 verschweißt ist. Der Querträger 102 ist wiederum mit dem Fahrzeug, insbesondere dessen Karosserie, verbunden. Mit anderen Worten ist die Anhängevorrichtung 101 in Figur 12 zumindest im Wesentlichen gemäß ihrem vollständig hergestellten Zustand dargestellt.

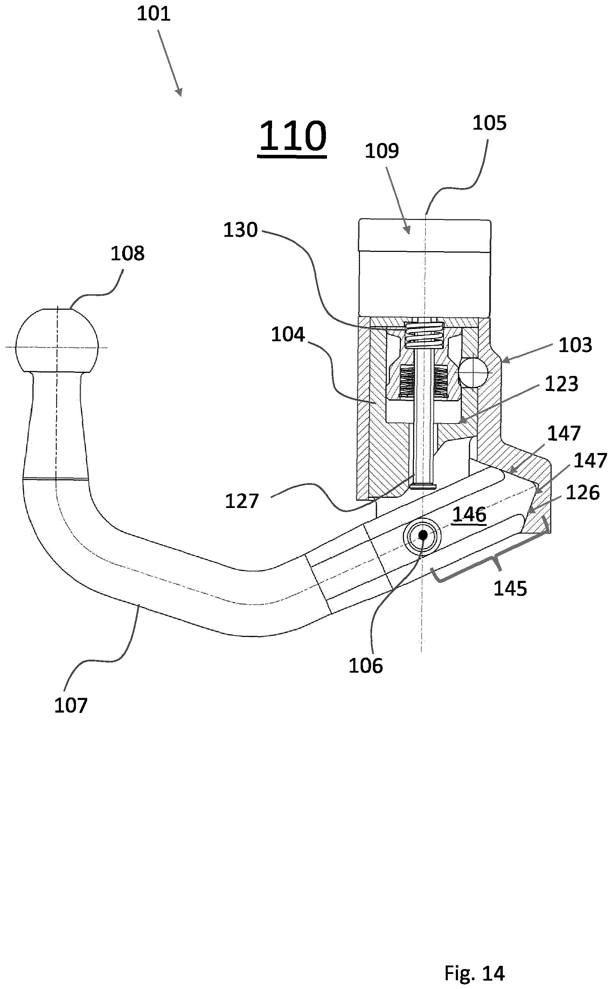

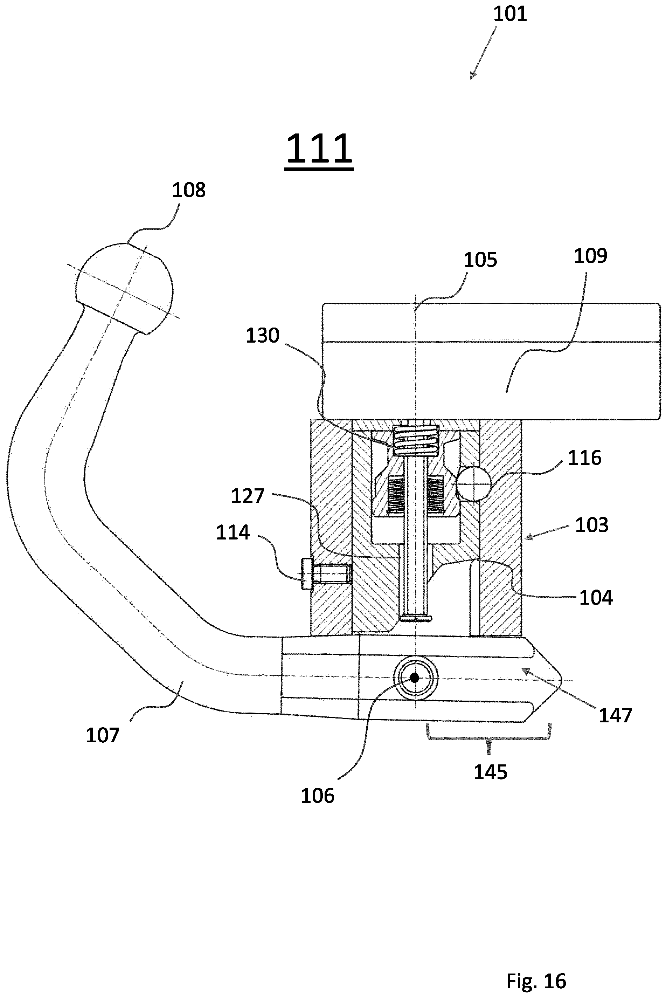

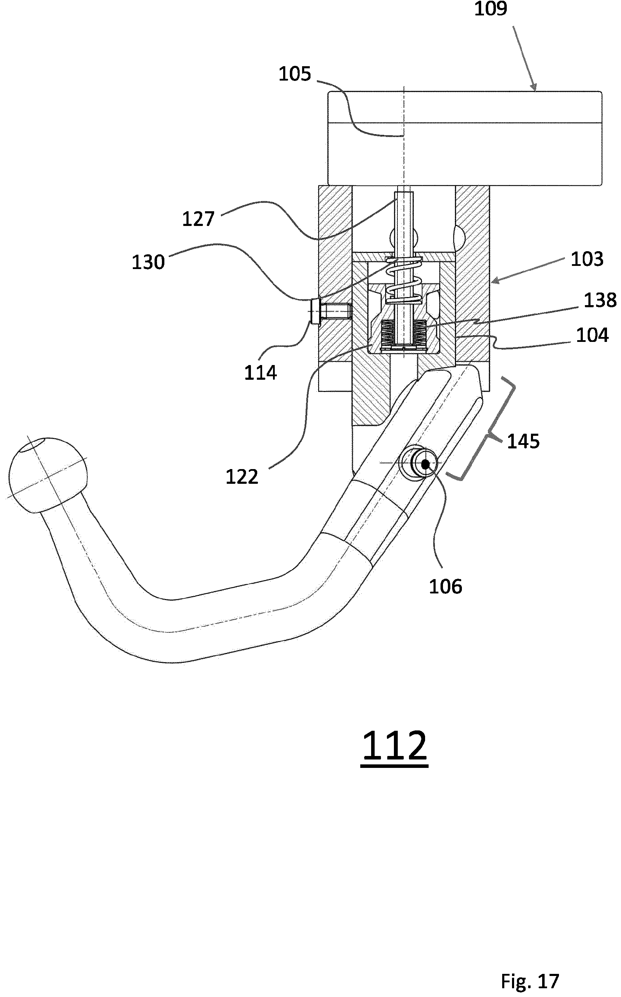

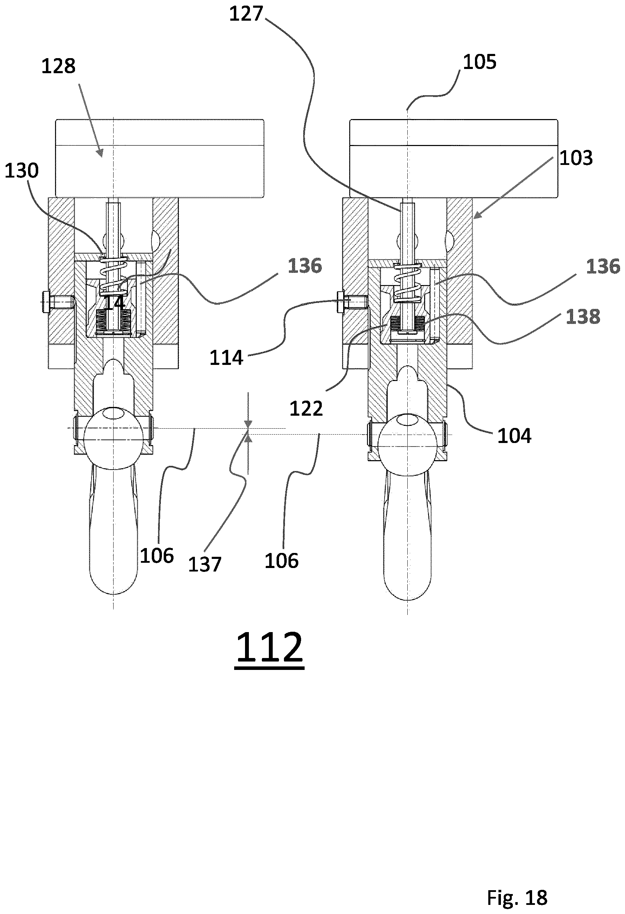

Die Anhängevorrichtung 101 umfasst eine Schwenklagereinheit 103, die in Kraft übertragender Weise mit dem Fahrzeugteil 102 verbunden ist. Die Schwenklagereinheit 103 weist eine vertikal verlaufende erste Schwenkachse 105 auf, wie beispielsweise in Figur 12 dargestellt ist. Außerdem umfasst die Anhängevorrichtung einen Schwenklagerkörper 104. Dieser ist, wie die Figuren 14 bis 17 besonders deutlich zeigen, in beziehungsweise an der Schwenklagereinheit 103 gelagert. Hierbei wird durch den Schwenklagerkörper 104 eine zweite Schwenkachse 106 definiert, die zumindest im Wesentlichen horizontal verläuft. Diese zweite Schwenkachse 106 ist beispielsweise in den Figuren 16 und 17 dargestellt. Insbesondere Figur 18 zeigt besonders deutlich, dass die erste Schwenkachse 105 und die zweite Schwenkachse 106 zumindest im Wesentlichen senkrecht zueinanderstehen.

Die Anhängevorrichtung 101 umfasst außerdem eine Kugelstange 107, die an einem Ende eine Kupplungskugel 108 aufweist. Dies ist beispielsweise den Figuren 14 bis 16 zu entnehmen. Mittels der Kupplungskugel 108 kann ein Zusatzgerät, beispielsweise ein Anhänger, an das Fahrzeug angekuppelt werden. Dazu wird beispielsweise ein mit der Kupplungskugel 108 korrespondierendes Kupplungsstück des Zusatzgeräts auf den Kugelkopf 108 aufgesetzt. Mit anderen Worten kann das Zusatzgerät durch Einhängen an beziehungsweise auf die Kupplungskugel 108 zumindest mittelbar mit dem Fahrzeug verbunden werden.

Die Kupplungsstange 107 ist schwenkbar und gelenkig mit dem Schwenklagerkörper 104 verbunden. Mit anderen Worten kann die Kugelstange 107 derart um die zweite Schwenkachse 106 verschwenkt werden, dass verschiedene Positionen erreichbar sind, wie beispielsweise in Zusammenschau der Figuren 14 bis 16 deutlich wird.

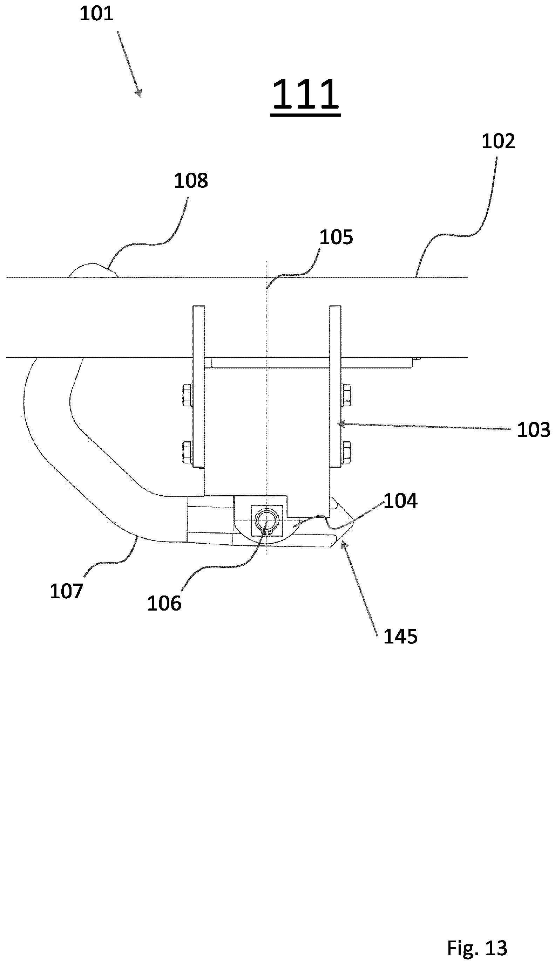

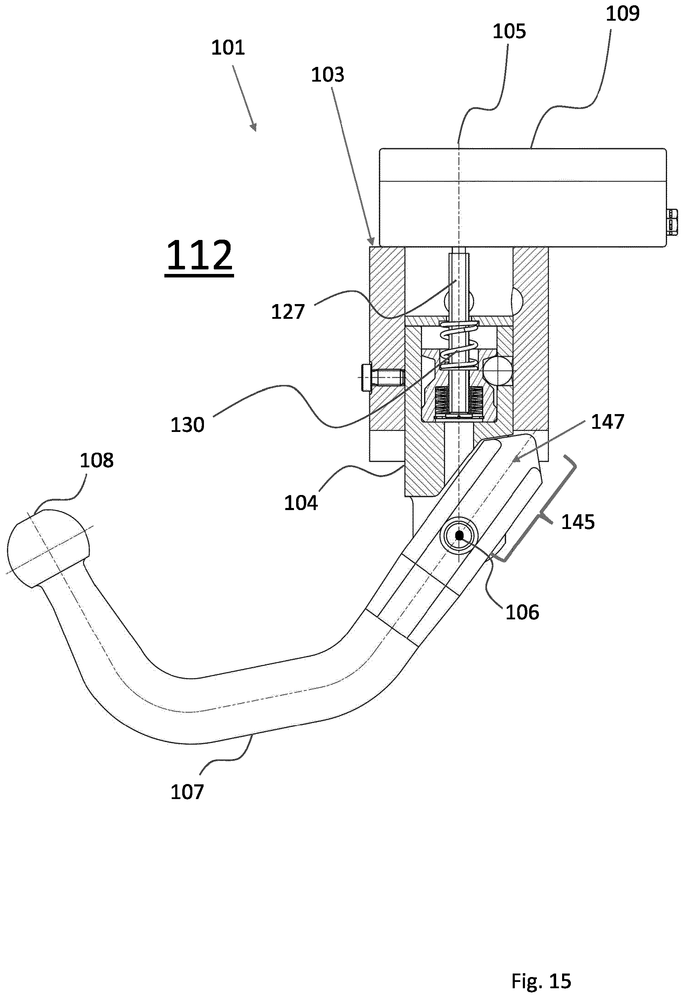

Die Anhängevorrichtung 101 weist weiterhin eine Antriebsvorrichtung 109 auf. Die Antriebsvorrichtung 109 ist vorliegend in Form eines Spindelantriebs ausgebildet, der beispielsweise elektrisch betreibbar ist. Hierbei umfasst die einfach auch als Spindelantrieb bezeichnete Antriebsvorrichtung 109 eine Spindel 127 sowie ein Getriebe 128. Dies ist beispielsweise in Figur 18 dargestellt. Das Getriebe 128 ist verzichtbar, sofern die Antriebsvorrichtung 109 ein ausreichend großes Drehmoment bereitstellen kann. Mittels der Antriebseinrichtung 109 ist die Kugelstange 107 von einer Betriebsposition 110 in eine Parkposition 111 überführbar und umgekehrt. Die Betriebsposition 110, in der sich die Kupplungskugel 108 frei zugänglich hinter dem Heck des Fahrzeugs befindet, ist beispielsweise in Figur 12 oder 14 dargestellt. Die Parkposition 111, in der sich die Kupplungskugel 108 verdeckt unterhalb des Fahrzeugs und insbesondere hinter dem Stoßfänger befindet, ist beispielsweise in Figur 13 oder 16 dargestellt. In diesem Zusammenhang kann die Kupplungskugel 108 in Abhängigkeit von einer Bauweise des Querträgers 102 vor, hinter und/oder unter diesem angeordnet sein. Während einer Überführung der Kupplungsstange 107 zwischen der Parkposition 111 und der Betriebsposition 110, beziehungsweise umgekehrt, durchläuft die Kupplungsstange 107 außerdem mindestens eine Zwischenposition 112. Dies ist beispielsweise in Figur 15, Figur 17 oder Figur 20 dargestellt.

Außerdem umfasst die Anhängevorrichtung 101 eine Kulissenführung 113, mittels der der Schwenklagerkörper 104 während der Überführung von der Betriebsposition 110 in die Parkposition 111 sowie umgekehrt sowohl translatorisch in vertikale Richtung als auch rotatorisch um die vertikal ausgerichtete erste Schwenkachse 105 bewegbar ist.

Hierbei sind vorliegend ein Kulissenstein 114 an der Schwenklagereinheit 103 und eine mit dem Kulissenstein 114 zusammenwirkende Kulissenbahn 115 in dem Schwenklagerkörper 104 angeordnet. Die Kulissenführung 113 umfasst also sowohl die Kulissenbahn 115 als auch den Kulissenstein 114.

Weiterhin ist mindestens eine Blockiereinrichtung 116 vorgesehen, mittels welcher der Schwenklagerkörper 104 relativ zu der Schwenklagereinheit 103 und die Kugelstange 107 relativ zu dem Schwenklagerkörper 104 oder der Schwenklagereinheit 103 blockierbar sind. Mit anderen Worten ist der Schwenklagerkörper 104 insbesondere in der Parkposition 111 beziehungsweise der Betriebsposition 110 mittels der Blockiereinrichtung 116 blockierbar beziehungsweise arretierbar.

Der Kulissenstein 114 ist in eine Richtung entlang der Bahn, d. h. in eine Bahnrichtung, relativ zu der Kulissenbahn bewegbar. Dabei bewegt sich der Schwenklagerkörper 4 relativ zu der fahrzeugfesten Schwenklagereinheit 3, wobei eine Zwangskopplung über das Kulissengetriebe vorliegt.

Um die Anhängevorrichtung 101 beziehungsweise die Kugelstange 107 von der Parkposition 111 in die Betriebsposition 110 beziehungsweise umgekehrt verschwenken zu können, muss die Kugelstange 107 also einerseits absenkbar beziehungsweise anhebbar und andererseits seitlich verschwenkbar sein. Dieser Hergang wird besonders in Zusammenschau der Figuren 12 und 13 deutlich. Während die Kugelstange 107 gemäß Figur 12 und in der Betriebsposition 110 von hinten gesehen mittig vor dem einfach auch als Querträger bezeichneten Fahrzeugteil 102 angeordnet ist, befindet sich die Kugelstange 107 gemäß Figur 13 und in der Parkposition von hinten gesehen hinter dem Querträger 102. Demzufolge muss die Kugelstange 107 gewissermaßen unter dem Stoßfänger "abtauchen" beziehungsweise "hinwegtauchen" können. Hierfür ist es erforderlich, die Kugelstange 107 abzusenken beziehungsweise abklappen zu können. Diese Zwischenposition 112 ist in Figur 15 dargestellt.

Die einfach auch als Spindelantrieb bezeichnete Antriebseinrichtung 109 ist mit einem Betätigungskörper 122 verbunden. Vorliegend ist die Spindel mit einem Außengewinde ausgebildet und der Betätigungskörper 122 mit einem damit korrespondierenden Innengewinde. Durch diese Ausgestaltung fungiert der Betätigungskörper 122 gewissermaßen als Mutter. Weiterhin ist um die Spindel 127 herum ein Federelement 130, vorliegend beispielsweise in Form einer Druckfeder, angeordnet. Mit anderen Worten ist die Spindel 127 gewissermaßen durch das Federelement 130 hindurchgesteckt, mithin in diesem angeordnet. Die Spindel 127 und das Federelement 130 sind folglich zumindest im Wesentlichen koaxial angeordnet. Hierbei ist das Federelement 130 derart angeordnet, dass ein Ende zumindest im Wesentlichen an dem Schwenklagerkörper 104 angeordnet ist. Außerdem ist ein gegenüberliegendes Ende an dem Betätigungskörper 122 angeordnet. Mit anderen Worten ist das Federelement 130 beidseitig abgestützt, nämlich einerseits (nach oben) durch den Schwenklagerkörper 104 und andererseits (nach unten) durch den Betätigungskörper 122. Die Figuren 14 bis 16 zeigen dies besonders deutlich.

Durch Betätigen des Spindelantriebs 109 kann der Betätigungskörper 122 höhenverstellt werden. Hierbei ist der Betätigungskörper 122 in der Betriebsposition 110 oben an dem Spindelantrieb 109 angeordnet. Dies ist beispielsweise in Figur 14 dargestellt. Im Folgenden wird mittels des Spindelantriebs 109 der Betätigungskörper 122 immer weiter vertikal entlang der ersten Schwenkachse 105 nach unten bewegt. Hierbei ist der Betätigungskörper 122 vorliegend in dem Schwenklagerkörper 104 angeordnet, wobei der Betätigungskörper 122 zu einem Anschlag 123 des Schwenklagerkörpers 104 beabstandet ist. Weiterhin ist ein Passstift 136 vorgesehen, mittels welchem der Schwenklagerkörper 104 und der Betätigungskörper 122 miteinander verbunden sind. Der Passstift 136 ist dabei derart an beziehungsweise in dem Schwenklagerkörper 104 und/oder dem Betätigungskörper 122 angeordnet, dass diese relativ zueinander drehblockiert sind. Allerdings ist eine relative Bewegung in axialer Richtung zueinander weiterhin möglich. Mit anderen Worten bewirkt der Betätigungskörper 122 erst dann eine Bewegung des Schwenklagerkörpers 104, wenn der Betätigungskörper 122 mittels des Spindelantriebs 109 soweit nach unten bewegt wird, dass der Betätigungskörper 122 dem Blockierkörper zwecks Verlassen seiner Formschlussstellung (Blockierstellung) eine Aufnahme im Bereich eines reduzierten Außendurchmessers bietet. Wieder mit anderen Worten ist der Betätigungskörper 122 gewissermaßen dazu ausgebildet, den Schwenklagerkörper 104 schwerkraftbedingt "mitzunehmen".

Der Betätigungskörper 122 muss folglich mittels einer Drehung der Spindel 127 erst so weit nach unten bewegt werden bis die Blockiereinrichtung gelöst wird. Der Betätigungskörper 22 folgt dabei nach Freigabe der Blockiereinrichtung aufgrund seines Eigengewichts dem Betätigungskörper 22 bei seiner Abwärtsbewegung (und auch bei der Aufwärtsbewegung). Dabei stützt sich der Schwenklagerkörper 104 über das Federelement 30 auf dem Betätigungskörper 122 ab. Die Steifigkeit des Federelements 30 ist so bemessen, dass dieses das Eigengewicht der Kugelstange 107 tragen kann, ohne dabei auf Block komprimiert zu werden.

Die Blockiereinrichtung 116, die vorliegend in Form einer Kugel ausgebildet ist, und zwischen Schwenklagereinheit 103 und Schwenklagerkörper 104 angeordnet ist, wird durch den Betätigungskörper 122 nach Art eines "Steuerschiebers" gesteuert, d.h. radial nach außen (=Blockade) bewegt bzw. nach innen eingelassen (=Freigabe).

Mittels der Antriebseinrichtung 109 kann somit zumindest mittelbar die Kugelstange 107 von der Betriebsposition 110 in die Parkposition 111 beziehungsweise umgekehrt verschwenkt werden.

Die vorliegend als Spindel ausgeführte Antriebseinrichtung 109 bewirkt - bei Betrachtung von oben - bei einer Rotation gegen den Uhrzeigersinn eine Bewegung des Betätigungskörpers 122 nach unten. Somit befindet sich die Kugelstange 107 vor beziehungsweise bei einer Rotation der Spindel im Uhrzeigersinn in der Betriebsposition 110. Mit anderen Worten ist der Betätigungskörper 122 in der Betriebsposition 110 weitest möglich innerhalb des beziehungsweise relativ zu dem Schwenklagerkörper 104 nach oben angeordnet und kann durch eine Drehung der Spindel gegen den Uhrzeigersinn nach unten bewegt werden.

Bei Beginn dieser Drehung der Spindel gegen den Uhrzeigersinn bilden Schwenklagerkörper 104 und Schwenklagereinheit 103 zunächst eine fest verbundene Einheit. In diesem Zusammenhang blockiert der Blockierkörper 124. Sobald der Betätigungskörper 122 aufgrund der Drehung der Spindel gegen den Uhrzeigersinn so weit nach unten bewegt wurde, dass er den Blockierkörper 124 freigibt, da er nämlich in die Ausnehmung eingelassen ist (=Freigabe), kann sich die Kugelstange 107 bewegen. Diese Bewegung erfolgt lediglich in vertikale Richtung nach unten, da die Drehrichtung die Kugelstange mit ihrem zweiten freien Ende (Kragabschnitt) gegen einen an der Schwenklagereinheit 103 angeordneten Anschlag (Betriebsanschlag) drückt.

Außerdem verhindert die Kulissenbahn 115 eine Drehung des Schwenklagerkörpers 104 und somit ein Absenken der Kugelstange 107. Diese Funktion der Kulissenführung wird allerdings während dieser Bewegungsphase wegen des zuvor erwähnten "Betriebsanschlags" am Kugelstangenende nicht benötigt. Schon allein durch das Eigengewicht der Kugelstange 107 sinkt diese während der vorgenannt beschriebenen Bewegung ab und folgt der Abwärtsbewegung des Bewegungskörpers 122. Dies ist deutlich in Zusammenschau der Figuren 14 und 15 zu erkennen. Gegenüber der in Figur 3 dargestellten Betriebsposition 110, in welcher sich die Kupplungskugel 108 zumindest im Wesentlichen auf gleicher Höhe wie der Querträger 102 befindet, ist die Kupplungskugel 108, wie in Figur 4 dargestellt, bereits deutlich in Bezug auf den Querträger 102 abgesenkt. In diesem Zusammenhang bewegt sich die Kugelstange 107 außerdem aus dem Sicherungsanschlag 126 heraus. Dies ist in Figur 15 dargestellt.

Die Kulissenbahn 115 ist vorliegend in Form einer Nut ausgebildet. In die Kulissenbahn 115 greift der Kulissenstein 114 ein. Dieser ist vorliegend beispielsweise in Form eines Stiftes ausgebildet und in der Schwenklagereinheit 103 angeordnet, über deren innere Mantelfläche er hervorragt. Der Kulissenstein 114 ist außerdem vorgespannt, nämlich mittels eines Federelements, sodass der Kulissenstein 114 zumindest im Wesentlichen entlang seiner Längsrichtung eine Federkraft ausübt, nämlich in radiale Richtung der Schwenklagereinheit 103, d.h. senkrecht zu der ersten Schwenkachse.

Da der Kulissenstein 114 in Form eines Stiftes vorgespannt ist, drückt dieser ständig von außen auf den Schwenklagerkörper 104. Ist der Schwenklagerkörper 104 nun derart ausgerichtet, dass die Nut dort befindlich ist, wo der Stift angeordnet ist, kommt somit der Stift in Eingriff mit der Nut. Sodann ist der Stift durch die Nut geführt, nämlich indem der Stift seitlich durch die Wandung 120i beziehungsweise 120a der Nut sowie einen Nutgrund abgestützt ist. Solange der Stift in der Nut ist, ist somit ausschließlich eine Bewegung des Schwenklagerkörpers 104 in Richtung der Nut, das heißt vertikal, also parallel zu der ersten Schwenkachse 105, möglich.

Der Kulissenstein 114 ist vorliegend in einer Wandung der Schwenklagereinheit 103 angeordnet und zwar nach Art einer Schraube oder eines Gewindebolzens in eine mit einem Innengewinde versehenen Bohrung in der betreffenden Wandung der Schwenklagereinheit 103 eingeschraubt. In diesem Zusammenhang ist besonders gut verständlich, dass der Kulissenstein 114 durch das Federelement derart vorgespannt ist, dass eine am vorderen Ende des Kulissensteins 114 angeordnete federbelastete, aber gefasste Kugel ständig in Richtung des Schwenklagerkörpers 104 drückt. Die Figuren 16 und 17 zeigen dies besonders deutlich.

Während aufgrund der Drehung der Spindel der Betätigungskörper 122 also so weit nach unten bewegt wurde, dass er den Blockierkörper 124 freigibt, mithin einer Bewegung des Schwenklagerkörpers 104 vor diesem Hintergrund grundsätzlich möglich wäre, ist der vorgespannte Stift von Beginn an in Eingriff mit der Nut. Da diese zumindest im Wesentlichen senkrecht ausgerichtet und der Kulissenstein 114 zumindest an einer Wandung der Nut abgestützt ist, wird eine Drehung des Schwenklagerkörpers 104 verhindert. Eine Drehung des Schwenklagerkörpers wird aber bereits allein deshalb verhindert, weil das freie Ende der Kugelstange (Kragabschnitt) an einer an der fahrzeugfesten Schwenklagereinheit angeordneten Anschlagfläche anliegt, die eine Rotation der Kugelstange (von oben betrachtet) gegen den Uhrzeigersinn unterbindet.

Um neben dieser rein vertikalen (translatorischen) Bewegung außerdem eine rotatorische Bewegung insbesondere der Kugelstange 107 zulassen zu können, weist die Kulissenführung 113 außerdem an ihrem unteren Ende eine Rampe, also eine schräge Fläche, auf, an beziehungsweise mittels welcher der Kulissenstein 114 die Kulissenbahn 115 verlassen kann.

Hierfür ist vorgesehen, dass die Kulissenbahn 115 zumindest im Bereich der Rampe 118 einen Neigungsabschnitt 133 aufweist. Zumindest innerhalb dieses Neigungsabschnitts 133 verringert sich die Tiefe der Nut, und zwar von einer Tiefstelle 132 zu einer Hochstelle 131. In diesem Zusammenhang ist vorliegend vorgesehen, dass die Tiefe der Nut an der Hochstelle 131 zumindest im Wesentlichen null beträgt, das heißt, dass zumindest an der Hochstelle 131 keine Nut mehr vorliegt, sondern die Nut in die zylindrische Oberfläche des Schwenklagerkörpers übergeht, mithin daran anschließt. Mit anderen Worten kann der Kulissenstein 114 dort, wo die Nut eine solche Tiefe aufweist, die ausreichend ist, um den Kulissenstein 114 zu führen, die Nut nicht verlassen. Demgegenüber kann der Kulissenstein 114 die Nut im Bereich der Rampe 118 verlassen, da nämlich dort die Tiefe der Nut nicht (mehr) ausreichend ist, um den Kulissenstein 114 zu führen. Insbesondere liegt der Kulissenstein 114 unterhalb der Rampe 114 unmittelbar an der zylindrischen äußeren Mantelfläche des Schwenklagerkörpers an. Um dies zu ermöglichen, ist die Beweglichkeit der Kugel des Kulissensteins 114 in radiale Richtung, das heißt senkrecht zu ersten Schwenkachse, erforderlich. Ist der Kulissenstein außerhalb der Nut, ist die Kugel um das Maß der Nuttiefe gegen eine Federkraft weiter in das schraubenförmige Grundteil des Kulissensteins hineingedrückt.

Auf diese Weise ist der Kulissenstein 114 gewissenmaßen von der Nut befreit, sodass er sich frei auf der Oberfläche des Schwenklagerkörper 104 bewegen kann. Hierdurch ist somit die rotatorische Bewegung möglich. Mit anderen Worten vollzieht die Kugelstange 107 die vertikale Bewegung dann, wenn der Kulissenstein 114 innerhalb von der Nut entlang dieser die vertikale Kulissenbahn 115 entlangfährt. In gleicher Weise vollzieht die Kugelstange 107 die rotatorische Bewegung bei einer Drehung der Spindel gegen den Uhrzeigersinn dann, wenn der Kulissenstein 114 nicht innerhalb von der Nut angeordnet ist, sondern sich von dieser frei auf beziehungsweise an dem Schwenklagerkörper bewegen kann. Eine solche Drehrichtungsänderung der Spindel findet im unteren Totpunkt unterhalb der Betriebsposition statt. Zuvor wurde noch das Federelement 122 in Form eines Tellerfederpakets in die in Figur 18 rechts dargestellte komprimierte, das heißt gespannte Stellung gebracht, indem ein Stützanschlag am unteren Ende der Spindel auf die untere Tellerfeder des Pakets drückt und damit das ganze Paket gegen den Betätigungskörper 122 zusammenpresst. In der Folge steigt ein erforderliches Antriebsmoment des Spindelantriebs an, was durch einen Sensor erfasst und bei Überschreiten eines vorbestimmten Grenzwertes abgeschaltet wird. Sodann wird der Motor umgepolt. Dabei sollte ein Anfahrmoment der Antriebseinrichtung nach Umpolen des Motors nicht so groß sein, dass das Tellerfederpaket entspannt wird und dann "durchrutscht".

Durch die nun von der Steuerungselektronik initierte Drehung der Spindel im Uhrzeigersinn wird die Kugelstange 107 so weit gedreht (ungefähr um 90 Grad), dass diese mit einer Anschlagfläche an ihrem freien Kragende an einem Parkanschlag 140 der Schwenklagereinheit 103 anschlägt, hierdurch durch diesen blockiert beziehungsweise gestoppt wird.

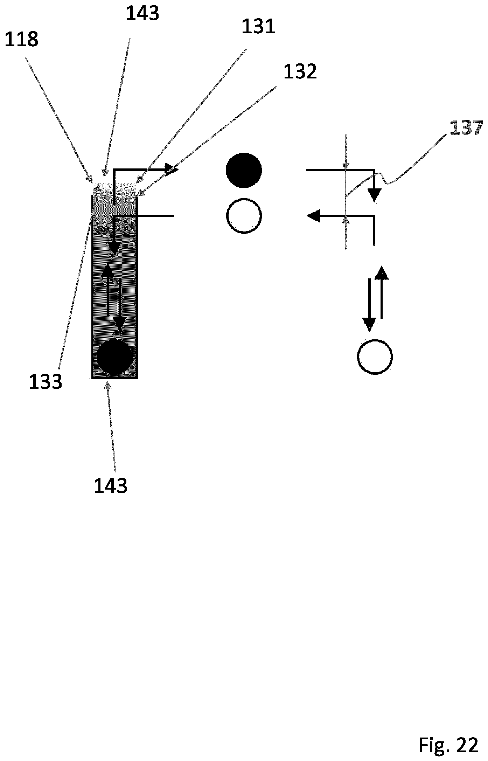

Nach der rein vertikalen Bewegung entlang der Nut befindet sich der Kulissenstein 114 ganz oben in der Nut. Die ist besonders gut in Figur 18 links zu erkennen. Sodann verlässt der Kulissenstein 114 die Nut und bewegt sich auf der Oberfläche des Schwenklagerkörpers 104. Dies ist besonders gut in Figur 22 zu erkennen. Hierdurch wird die rotatorische Bewegung vollzogen.

Hierbei weist die Kulissenbahn 115 eine Breite 119 sowie eine äußere Wandung 120a und eine innere Wandung 120i auf. In diesem Zusammenhang ist vorliegend vorgesehen, dass der Kulissenstein 114 zumindest teilweise entsprechend der Breite 119 in die Kulissenbahn 115 hineinragt. Mit anderen Worten steht der Kulissenstein 14 zumindest mit einem Teil der Breite 119 in der Kulissenbahn 115, sodass er in diese eingreifen kann. Während der Bewegung kommt der Kulissenstein 114 daher in Kontakt mit der Wandung 120a beziehungsweise 120i. Dies ist in den Figuren 18 und 22 dargestellt.

Nach der Verschwenkung der Kugelstange 107 von einem unteren Totpunkt unterhalb der Betriebsposition in einen unteren Totpunkt (der dieselbe Höhenlage besitzt) unterhalb der Parkposition schlägt das hintere Kugelstangenende an einen an der Schwenklagereinheit 103 angeordneten Parkanschlag, wodurch die Schwenkbewegung beendet wird. Die Spindel 127 bewirkt bei Fortsetzung ihrer Drehung nun eine Axialkraft auf das Federelement 138 in Richtung der Spindel 127, nun aufgrund der entgegengesetzten Drehrichtung im Sinne einer Entspannung des Tellerfederpakets. Bei weiterer Drehung der Spindel in diese Richtung (Uhrzeigersinn) findet eine reine vertikale Bewegung der Kugelstange 107 statt, während die Kugelstange 107 mit ihrem freien hinteren Ende an dem Parkanschlag anliegt. Der Kulissenstein befindet sich dabei außerhalb der Nut auf der Zylinderoberfläche des Schwenklagerkörpers. Die Spindel 127 dreht nun so lange im Uhrzeigersinn, bis die Kugelstange 107 die in Figur 16 gezeigte Parkposition erreicht, in der der Blockierkörper 114 der Blockiereinrichtung 116 (Teileinrichtung 116.1) in die dann relevante Ausnehmung in der Schwenklagereinheit.

Zusammenfassend ist das Tellerfederpaket bei einer Verschwenkung der Kugelstange 107 im Uhrzeigersinn (d.h. auch Rotation der Spindel im Uhrzeigersinn) stark verspannt, das heißt stark gestaucht, während es bei einer Verschwenkung der Kugelstange 107 gegen den Uhrzeigersinn (d.h. auch Rotation der Spindel gegen den Uhrzeigersinn) schwach verspannt, das heißt (im Vergleich) weniger gestaucht ist. Letzteres gilt bei einer Rückverschwenkung der Kugelstange von der Park- in die Betriebsposition, wie weiter unten noch erläutert wird.

Bei der (Rück-)Überführung der Kugelstange 107 von der Park- in die Betriebsposition ist der Ablauf folgendermaßen: Die Steuerung initiert eine Spindelrotation gegen den Uhrzeigersinn, so dass zunächst wieder die Teileinrichtung 116.1 der Blockiereinrichtung 116 in eine Freigabestellung überführt wird, wodurch die rein vertikale Abwärtsbewegung der Kugelstange 107 eingeleitet wird. Da das Tellerfederpaket unverspannt ist, dreht die Spindel quasi innerhalb des Betätigungskörpers durch, wodurch die axiale, d.h. vertikale Bewegung der Kugelstange erzielt wird. Sobald der untere Stützanschlag der Spindel mit der untersten Tellerfeder in Kontakt kommt, entsteht ein zunehmender Spannungszustand in dem Tellerfederpaket. Dies wiederum bewirkt ab einer bestimmten Spannung einen "Mitnahmeeffekt", d.h. die Kugelstange 107 wird entgegen ihrer Trägheit mit der Spindel entgegen dem Uhrzeigersinn um 90 Grad in Richtung auf die Betriebsposition bzw. zunächst in den zugeordneten unteren Totpunkt unterhalb der Betriebsposition verschwenkt. Da das Tellerfederpaket, das wie eine Rutschkupplung wirkt, bei dieser Rückverschwenkung weniger stark verspannt sein muss, als dies bei der maximal möglichen Verspannung auf dem "Hinweg" (Verspannung, bis Tellerfederpaket auf Block sind) der Fall ist, gelangt der Kulissenstein kurz vor Erreichen des an der Schwenklagereinheit befindlichen Betriebsanschlags für Kugelstange 107 in die Nut. In diesem Moment wir die Spindelrotation von einem an der Schwenklagereinheit 103 angeordneten Näherungsschalter abgeschaltet. Die Höhenverhältnisse der Kugelstange 107 bzw. des Schwenklagerkörpers 104 ergeben sich aus den Figuren 18 und 22.

Wie diese Figuren besonders deutlich zeigen, befindet sich die Kupplungskugel 108 in zwei Zwischenpositionen 112 auf unterschiedlichen Höhen (vergleiche zweite Schwenkachse 106 links in der Figur 18 und zweite Schwenkachse 106 rechts in der Figur 18). Links in Figur 18 ist gewissermaßen ein erster Zustand gezeigt, das heißt die Zwischenposition 112 befindet sich gerade vor der rotatorischen (Hin-)Bewegung, also um die Kugelstange 107 beispielsweise von der Parkposition 111 in die Betriebsposition 110 beziehungsweise umgekehrt zu überführen.

Anschließend, das heißt sobald die rotatorische Bewegung zurück Richtung Betriebsposition abgeschlossen ist, findet (wieder) die reine translatorische, also vertikale, Bewegung statt. Wie Figur 18 rechts zeigt, ist der Schwenklagerkörper 104 während der rotatorischen Bewegung nur so weit nach unten abgesenkt wird, dass der Kulissenstein 114 durch Hineinfallen in Eingriff mit der Nut kommen kann. Wie deutlich in Figur 18 (als Vergleich links und rechts) erkennbar ist, wird das Tellerfederpaket in einem Endabschnitt der Bewegung des Betätigungskörpers gestaucht, wenn sich der Schwenklagerkörper 104 nach unten bewegt.

Bei der anschließenden erneuten Umkehr der Drehrichtung der Spindel (Rotation im Uhrzeigersinn) wird der Schwenklagerkörper aufgrund des Eingriffs des Kulissensteins in die Nut an einer Rückverschwenkung in Richtung auf die Parkposition gehindert, sodass dann eine reine vertikale Bewegung nach oben erfolgt. Die Aufwärtsbewegung endet in der Betriebsposition und der Blockierung der Kugelstange dort mittels der Teileinrichtung 116.1 der Blockiereinrichtung.

Die Abweichung zwischen den Bahnlinien des Kulissensteins auf bzw. in (während einer Bewegung im Nutabschnitt) dem Schwenklagerkörper bei der Überführung der Kugelstange 107 von der Betriebs- in die Parkposition einerseits (weiter abgesenkter horizontaler Bahnabschnitt) und von der Parkposition 111 in die Betriebsposition 110 andererseits (weiter oben gelegener horizontaler Bahnabschnitt) kann auch als Hysterese bezeichnet werden.

Dies ist insbesondere in Zusammenschau der Figuren 18 und 22 erkennbar. Figur 22 zeigt die Bahnkurve des Kulissensteins während einer Bewegung von der Betriebsposition 111 in die Parkposition 110 (schwarz ausgefüllter Kreis) beziehungsweise umgekehrt (weiß ausgefüllter Kreis). Der Abstand dieser Bahnkurven stimmt exakt mit der in Figur 18 abgebildeten Hysterese 141 überein. Mit anderen Worten sind die Bahnkurven der jeweiligen Bewegung genau so viel zueinander versetzt, wie durch die Verspannung des Tellerfederpakets verursacht wird (Hysterese).

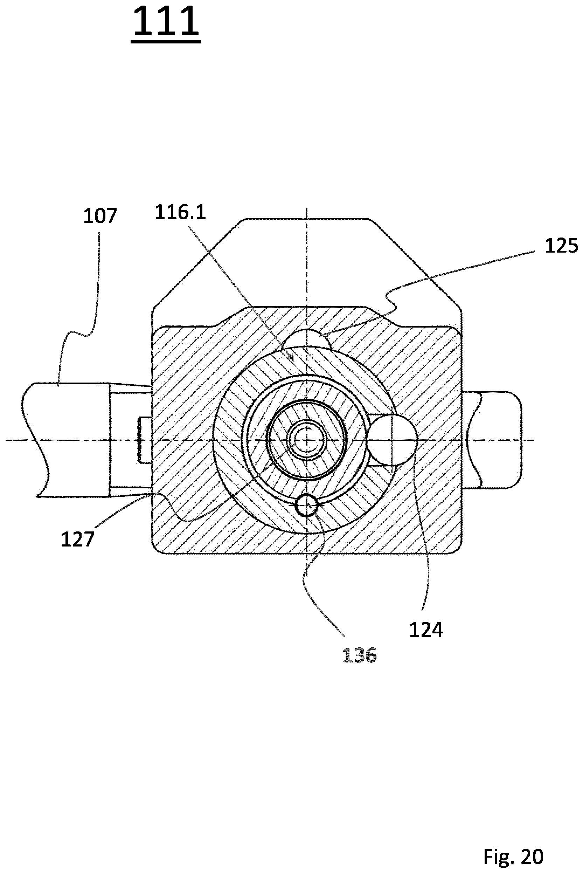

Um die Anhängevorrichtung 1 sowohl in der Parkposition 111 als auch in der Betriebsposition 110 zu sichern, ist weiterhin die Blockiereinrichtung 116 vorgesehen, die aus zwei Teileinrichtungen 116.1 und 116.2 besteht. Die Teileinrichtung 116.1 wird nun anhand der Figur 20 näher erläutert wird. Die Teileinrichtung 116.1 umfasst einen Blockierkörper 124, der vorliegend in Form einer Kugel ausgestaltet ist. Außerdem umfasst die Schwenklagereinheit 103 eine mit dem Blockierkörper 124 korrespondierende Aussparung 125. Dies ist außerdem in Figur 22 in einer schematischen Schnittansicht von oben auf die Schwenklagereinheit 3 dargestellt. Mit anderen Worten kann der Blockierkörper 124 zumindest teilweise in die Aussparung 125 eingreifen. Dies ist beispielsweise in Figur 15 dargestellt. Hierbei ist der Blockierkörper 124 in dem Schwenklagerkörper 104 angeordnet und bewegt sich entsprechend mit diesem. Mit anderen Worten wird der Blockierkörper 124 bei einer Aufwärts- oder Abwärtsbewegung in Bezug auf die erste Schwenkachse 105 entsprechend mit hoch beziehungsweise runter bewegt. Wieder mit anderen Worten kommt der Blockierkörper 124 genau dann in Eingriff mit der Aussparung 125, wenn sich beide auf derselben Höhe befinden. Ist der Blockierkörper 124 in der Aussparung 125 angeordnet, ist die Anhängevorrichtung 1 blockiert. Dies trifft sowohl in der Betriebs- als auch der Parkposition gleichermaßen zu, wobei es für beide Positionen jeweils eine eigene Aussparung 125 existiert, die um 90 Grad verdreht zueinander sind.

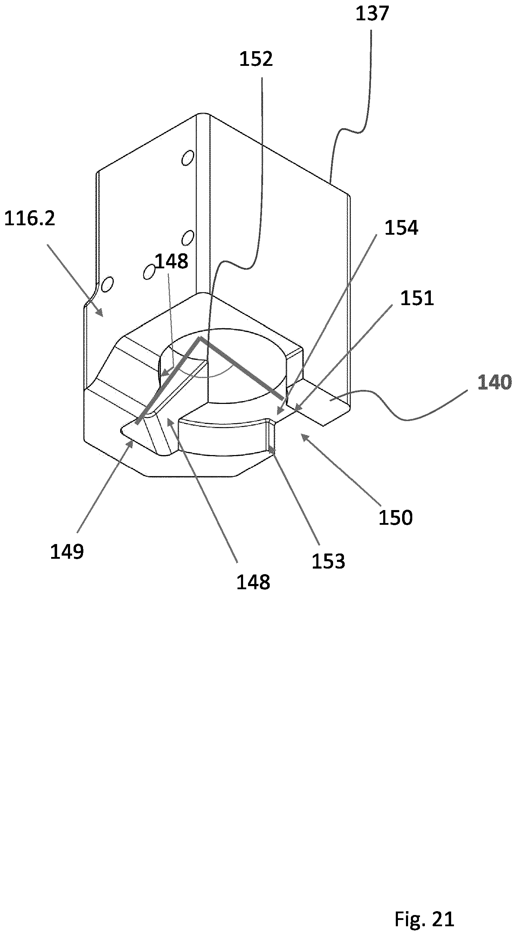

Nachfolgend wird die zweite Teileinrichtung 116.2 der Blockiereinrichtung 116 erläutert. Wie sich insbesondere aus der Figur 21 ergibt, ist die Unterseite der Schwenklagereinheit 103 mit einer komplexen Geometrie versehen, die insbesondere auf ein Zusammenwirken mit dem freien Kragabschnitt 145 der Kugelstange (siehe Figuren 14 bis 17) abgestimmt ist und gemeinsam mit diesem die zweite Teileinrichtung 116.2 der Blockiereinrichtung 116 bildet. In der Betriebsposition 110 der Kugelstange 107 (siehe auch Figur 14) befindet sich der Kragabschnitt 145 (freies Kugelstangenende) unter Ausbildung eines Formschlusses in einer angepassten Tasche 148 (siehe Figur 21). Durch diesen Eingriff ist sowohl eine Rotation der Kugelstange 107 um die erste Schwenkachse 105 (in beide Drehrichtungen), als auch ein Absenken oder Anheben der Kugelstange 107 (insbesondere auch durch eine Verschwenkung um die zweite Schwenkachse) unterbunden, jedenfalls sofern eine vertikale Bewegung des Schwenklagerkörpers 104 durch eine weitere Blockiereinrichtung unterbunden ist, was zum Beispiel durch eine Blockiereinrichtung nach Art der ersten Teileinrichtung 116.1 erfolgen kann. Die Kraftableitung erfolgt dabei aus dem Kugelstangenende über die in entgegengesetzte Richtungen weisenden beiden vertikalen Anschlagflächen 146 ("seitliche Anschlagflächen") des Kragabschnitts 145 und zwei ungefähr in einem rechten Winkel zueinander versetzt angeordnete hintere Anschlagflächen 147 ("dritte Anschlagflächen") ebenfalls des Kragabschnitts 145. Damit korrespondieren die Anschlagflächen 148 an der Tasche 149 ("Betriebstasche") der Schwenklagereinheit 103.

Die Verhältnisse in der Parkposition 111 sind zusätzlich zu Figur 21 auch aus der Figur 16 zu entnehmen. Die in diesem Fall wirksame weitere Tasche 150 ("Parktasche") in der Schwenklagereinheit 103 besitzt die Form einer Nut, die durch gegenüberliegende Anschlagflächen 151 und 153 begrenzt wird, welche wiederum mit den beiden in entgegengesetzte Richtungen weisenden Anschlagflächen 146 an dem Kragabschnitt 145 der Kugelstange 107 zusammenwirken und eine Rotation der Kugelstange 107 um die erste Schwenkachse 105 in beide Drehrichtungen unterbinden. Da ein Boden 155 der nutförmigen Tasche tiefer liegt als die "dritten" Anschlagflächen in der Betriebsposition 110, nimmt die Kupplungskugel 108 in der Betriebsposition 110 eine tiefere Position ein als in der Parkposition 111.

Sowohl in der Parkposition 111 als auch in der Betriebsposition 110 ragt die Spindel 127 aus dem Betätigungskörper 122 hervor. Da der Betätigungskörper 122 den Schwenklagerkörper 104 gewissermaßen "mitnimmt", ist auch der Schwenklagerkörper 104 in der Betriebsposition 110 beziehungsweise der Parkposition 111 zumindest nicht wesentlich relativ zu der Spindel 127 ausgefahren. Demgegenüber ist der Schwenklagerkörper 104 in der Zwischenposition 112 deutlich relativ zu der Spindel 127 beabstandet, mithin gegenüber dieser ausgefahren. Figur 15 zeigt dies. Mit anderen Worten wird der Schwenklagerkörper 104 nur ausgefahren, um die Anhängevorrichtung 101 von der Parkposition 111 in die Betriebsposition 110 zu verbringen beziehungsweise umgekehrt. Mit anderen Worten ist der Schwenklagerkörper 104 ausschließlich in der jeweiligen Zwischenposition 112 (Umkehrstellung/-position) ausgefahren, wie auch aus Zusammenschau der Figuren 14, 16 und 18 deutlich hervorgeht. Bei der Hinbewegung der Kugelstange von der Betriebs- in die Parkposition und umgekehrt (Rückbewegung) gibt es somit zwei unterschiedliche "untere Totpunkte" des Schwenklagerkörpers, von denen der bei der Hinbewegung aufgrund des Zusatzweges für die Tellerfederverspannung tiefer ist, als der bei Rückbewegung, bei der lediglich eine geringe Verspannung zur Erreichung eines gerade zur Verschwenkung ausreichenden Rutschmoments nötig ist.

### Bezugszeichenliste

- 1: Anhängevorrichtung
- 2: Fahrzeugteil
- 3: Schwenklagereinheit
- 4: Schwenklagerkörper
- 5: erste Schwenkachse
- 6: zweite Schwenkachse
- 7: Kugelstange
- 8: Kupplungskugel
- 9: Antriebseinrichtung
- 10: Betriebsposition
- 11: Parkposition
- 12: Zwischenposition
- 13: Kulissenführung
- 14: Kulissenstein
- 15: Kulissenbahn
- 16: Blockiereinrichtung
- 17: Umkehrabschnitt
- 18: Stufe
- 19: Breite
- 20i: Wandung innen
- 20a: Wandung außen
- 21: Tiefe
- 22: Betätigungskörper
- 23: Anschlag
- 24: Blockierkörper
- 25: Aussparung
- 26: Sicherungsanschlag
- 27: Spindel
- 28: Getriebe
- 29: Führungskörper
- 30: Federelement
- 31: Hochstelle
- 32: Tiefstelle
- 33: Neigungsabschnitt
- 34: Anschlagfläche
- 35: Ausnehmung
- 36: Passstift
- 101: Anhängevorrichtung
- 102: Fahrzeugteil
- 103: Schwenklagereinheit
- 104: Schwenklagerkörper
- 105: erste Schwenkachse
- 106: zweite Schwenkachse
- 107: Kugelstange
- 108: Kupplungskugel
- 109: Antriebseinrichtung
- 110: Betriebsposition
- 111: Parkposition
- 112: Zwischenposition
- 113: Kulissenführung
- 114: Kulissenstein
- 115: Kulissenbahn
- 116: Blockiereinrichtung
- 116.1: Teileinrichtung
- 116.2: Teileinrichtung
- 117: Umkehrabschnitt
- 118: Rampe
- 119: Breite
- 120i: Wandung innen
- 120a: Wandung außen
- 121: Tiefe
- 122: Betätigungskörper
- 123: Anschlag
- 124: Blockierkörper
- 125: Aussparung
- 126: Sicherungsanschlag
- 127: Spindel
- 128: Getriebe
- 129: Führungskörper
- 130: Federelement
- 131: Hochstelle
- 132: Tiefstelle
- 133: Neigungsabschnitt
- 134: Anschlagfläche
- 135: Ausnehmung
- 136: Passstift
- 137: Höhendifferenz
- 138: Federelement
- 139: Parkanschlag
- 140: Betriebsanschlag
- 141: äußere Führungsfläche
- 142: innere Führungsfläche
- 143: Extremstelle
- 144: Anschlagfläche
- 145: Kragabschnitt
- 146: Anschlagfläche
- 147: Anschlagfläche
- 148: Tasche
- 149: Anschlagfläche
- 150: Tasche
- 151: Anschlagfläche
- 152: Winkel
- 153: Anschlagfläche
- 154: Anschlagfläche
- 155: Boden

## Patentansprüche

1. Anhängevorrichtung (1) zur Anbringung an einem Heck eines Fahrzeugs, die Anhängevorrichtung (1) umfassend
a) eine mit einem Fahrzeugteil (2) in Kraft übertragender Weise verbindbare Schwenklagereinheit (3), die eine vertikal verlaufende erste Schwenkachse (5) definiert,
b) einen in oder an der Schwenklagereinheit (3) um die erste Schwenkachse (5) schwenkbar gelagerten Schwenklagerkörper (4),
c) eine Kugelstange (7), die an einem ersten Ende mit dem Schwenklagerkörper (4) verbunden ist und an einem gegenüberliegenden freien zweiten Ende eine Kupplungskugel (8) aufweist,
d) eine Antriebseinrichtung (9), mittels der die Kugelstange (7) von einer Betriebsposition (10), in der sich die Kupplungskugel (8) frei zugänglich hinter dem Heck des Fahrzeugs befindet, in eine Parkposition (11) sowie umgekehrt überführbar ist, in der sich die Kupplungskugel (8) verdeckt unterhalb des Fahrzeugs befindet, wobei die Kugelstange (7) während der Überführung von der Betriebsposition (10) in die Parkposition (11) und umgekehrt relativ zu der Schwenklagereinheit (3) rotatorisch um die erste Schwenkachse (5) bewegbar ist,
e) eine Kulissenführung (13), mittels der der Schwenklagerkörper (4) während der Überführung von der Betriebsposition (10) in die Parkposition (11) sowie umgekehrt sowohl translatorisch in vertikale Richtung zwischen einem oberen Totpunkt und einem unteren Totpunkt als auch rotatorisch um die vertikal ausgerichtete erste Schwenkachse (5) bewegbar ist, wobei ein Kulissenstein (14) an oder in der Schwenklagereinheit (3) oder dem Schwenklagerkörper (4) und eine mit dem Kulissenstein (14) zusammenwirkende Kulissenbahn (15) an oder in dem Schwenklagerkörper (4) oder der Schwenklagereinheit (3) angeordnet sind, und
f) mindestens eine Blockiereinrichtung (16) mittels der in der Parkposition (11) und/oder in der Betriebsposition (10) der Schwenklagerkörper (4) relativ zu der Schwenklagereinheit (3) und die Kugelstange (7) relativ zu dem Schwenklagerkörper (4) oder der Schwenklagereinheit (3) blockierbar sind,
wobei die Kugelstange (7) an ihrem zweiten Ende um eine zweite Schwenkachse relativ zu dem Schwenklagerkörper (4) schwenkbar und die Kugelstange (7) in der Betriebsposition (10) in dem zugeordneten oberen Totpunkt des Schwenklagerkörpers (4) mit einer an ihrem zweiten Ende befindlichen Anschlagfläche (134) unmittelbar an einer Anschlagfläche (144) der Schwenklagereinheit (3) blockierbar ist, wobei die an dem zweiten Ende der Kugelstange (7) befindliche Anschlagfläche (134) einerseits und die Kupplungskugel (8) andererseits auf verschiedenen Seiten der zweiten Schwenkachse (6) angeordnet sind und **dadurch gekennzeichnet, dass** die Antriebseinrichtung einen Spindelantrieb und der Schwenklagerköper (4) oder ein darin oder daran angeordneter Betätigungskörper (22) ein Innengewinde aufweisen.

2. Anhängevorrichtung (1) nach Anspruch 1, **dadurch gekennzeichnet, dass** die Kugelstange (7) an dem der Kupplungskugel (8) entgegengesetzten zweiten Ende einen freien Kragabschnitt (145) aufweist, an dem die Anschlagfläche (134) angeordnet ist.

3. Anhängevorrichtung (1) nach Anspruch 1, **dadurch gekennzeichnet, dass** die Kugelstange (7) in der Parkposition in dem oberen Totpunkt des Schwenklagerkörpers (4) mit ihrem zweiten Ende an einer weiteren Anschlagfläche (146) der Schwenklagereinheit (3) blockierbar ist.

4. Anhängevorrichtung (1) nach Anspruch 1, **dadurch gekennzeichnet, dass** die Kugelstange (7) schwerkraftbedingt ein solches Drehmoment um die zweite Schwenkachse ausübt, dass die Kupplungskugel (8) bestrebt ist, sich in eine Position mit geringerer geodätischer Höhe abzusenken.

5. Anhängevorrichtung (1) nach Anspruch 1 und 2, **dadurch gekennzeichnet, dass** die Antriebseinrichtung von einem Elektromotor antreibbar ist.

6. Anhängevorrichtung (1) nach einem der vorangehenden Ansprüche **dadurch gekennzeichnet, dass** der Betätigungskörper (22) in Richtung der ersten Schwenkachse relativ zu dem Schwenklagerkörper (4) bewegbar ist, wobei vorzugsweise eine Relativbewegung zwischen Betätigungskörper (22) und Schwenklagerkörper (4) ausschließlich vor Verlassen und/oder nach Erreichen des oberen Totpunkts des Schwenklagerkörpers (4) in der Schwenklagereinheit (3) möglich ist.

7. Anhängevorrichtung (1) nach einem der vorangehenden Ansprüche **dadurch gekennzeichnet, dass** die Anschlagfläche (134) der Kugelstange (7) und die Anschlagfläche (144) der Schwenklagereinheit (3) bei der Blockierung in der Betriebsposition (10) und/oder der Parkposition (11) formschlüssig ineinander eingreifen.

8. Anhängevorrichtung (1) nach einem der vorangehenden Ansprüche, **dadurch gekennzeichnet, dass** in der Betriebsposition und/oder der Parkposition zwei einander gegenüberliegende, mit dem zweiten Ende der Kugelstange (7) zusammenwirkende Anschlagflächen (144, 147) der Schwenklagereinheit (3) eine Verschwenkung der Kugelstange (7) um die erste Schwenkachse (5) in beide Drehrichtungen unterbinden.

9. Anhängevorrichtung (1) nach einem der vorangehenden Ansprüche **dadurch gekennzeichnet, dass** eine Ausnehmung (35) in der Schwenklagereinheit (3), betrachtet in einem Querschnitt durch diese, zumindest im Wesentlichen eine V-Form beziehungsweise eine Keilform bildet, wobei die Ausnehmung (35) zumindest die Anschlagfläche (34) der Schwenklagereinheit (3) umfasst.

10. Anhängevorrichtung (1) nach einem der vorangehenden Ansprüche **dadurch gekennzeichnet, dass** eine weitere Blockierung am Schwenklagerkörper (4) in der Schwenklagereinheit (3) durch einen Blockierkörper (24) bewerkstelligt wird.

## Claims

1. A towing device (1) for attachment to a rear of a vehicle, the towing device (1) comprising
a) a pivot bearing unit (3), able to be connected to a vehicle part (2) in a force-transmitting manner, which pivot bearing unit defines a vertically-running first pivot axis (5),
b) a pivot bearing body (4), pivotably mounted in or on the pivot bearing unit (3) about the first pivot axis (5),
c) a ball rod (7), which is connected at a first end to the pivot bearing body (4) and has at an opposite free second end a coupling ball (8),
d) a drive device (9), by means of which the ball rod (7) is able to be transferred from an operating position (10), in which the coupling ball (8) is situated freely accessibly behind the rear of the vehicle, into a parking position (11), and vice versa, in which the coupling ball (8) is situated concealed beneath the vehicle, wherein the ball rod (7), during the transferring from the operating position (10) into the parking position (11) and vice versa is movable rotatably relative to the pivot bearing unit (3) about the first pivot axis (5),
e) a sliding guide (13), by means of which the pivot bearing body (4), during the transferring from the operating position (10) into the parking position (11) and vice versa, is able to be moved translationally in vertical direction between an upper dead centre and a lower dead centre and also rotatably about the vertically aligned first pivot axis (5), wherein a sliding block (14) is arranged on or in the pivot bearing unit (3) or the pivot bearing body (4), and a sliding track (15) interacting with the sliding block (14) is arranged on or in the pivot bearing body (4) or the pivot bearing unit (3), and
f) at least one blocking device (16), by means of which, in the parking position (11) and/or in the operating position (10), the pivot bearing body (4) is able to be blocked relative to the pivot bearing unit (3), and the ball rod (7) is able to be blocked relative to the pivot bearing body (4) or the pivot bearing unit (3),
wherein the ball rod (7) is pivotable at its second end about a second pivot axis relative to the pivot bearing body (4), and the ball rod (7) in the operating position (10) is able to be blocked in the associated upper dead centre of the pivot bearing body (4) with a stop surface (134), situated at its second end, directly on a stop surface (144) of the pivot bearing unit (3), wherein the stop surface (134) situated at the second end of the ball rod (7) on the one hand, and the coupling ball (8) on the other hand, are arranged on different sides of the second pivot axis (6), and **characterized in that**
the drive device has a spindle drive, and the pivot bearing body (4), or an actuating body (22) arranged therein or thereon, has an internal thread.

2. The towing device (1) according to Claim 1, **characterized in that** the ball rod (7) has at the second end opposite the coupling ball (8) a free cantilever section (145), on which the stop surface (134) is arranged.

3. The towing device (1) according to Claim 1, **characterized in that** the ball rod (7), in the parking position in the upper dead centre of the pivot bearing body (4) is able to be blocked by its second end on a further stop surface (146) of the pivot bearing unit (3) .

4. The towing device (1) according to Claim 1, **characterized in that**, due to gravity, the ball rod (7) exerts such a torque about the second pivot axis that the coupling ball (8) endeavours to lower itself into a position with less geodetic height.

5. The towing device (1) according to Claim 1 and 2, **characterized in that** the drive device is able to be driven by an electric motor.

6. The towing device (1) according to one of the preceding claims, **characterized in that** the actuating body (22) is movable in the direction of the first pivot axis relative to the pivot bearing body (4), wherein preferably a relative movement between actuating body (22) and pivot bearing body (4) is possible exclusively before leaving and/or after reaching the upper dead centre of the pivot bearing body (4) in the pivot bearing unit (3).

7. The towing device (1) according to one of the preceding claims, **characterized in that** the stop surface (134) of the ball rod (7) and the stop surface (144) of the pivot bearing unit (3) engage into one another in a form-fitting manner at the blocking in the operating position (10) and/or the parking position (11).

8. The towing device (1) according to one of the preceding claims, **characterized in that** in the operating position and/or the parking position, two stop surfaces (144, 147) of the pivot bearing unit (3), opposite one another, interacting with the second end of the ball rod (7), prevent a pivoting of the ball rod (7) about the first pivot axis (5) in both rotation directions.

9. The towing device (1) according to one of the preceding claims, **characterized in that** a recess (35) in the pivot bearing unit (3), viewed in a crosssection through the latter, forms at least substantially a V-shape or respectively a wedge shape, wherein the recess (35) comprises at least the stop surface (34) of the pivot bearing unit (3).

10. The towing device (1) according to one of the preceding claims, **characterized in that** a further blocking is brought about on the pivot bearing body (4) in the pivot bearing unit (3) by a blocking body (24) .

## Revendications

1. Dispositif de remorquage (1) destiné à être fixé à l'arrière d'un véhicule, le dispositif de remorque (1) comprenant
a) une unité de palier pivotant (3) qui peut être reliée par transmission de force à une pièce de véhicule (2), qui définit un premier axe de pivotement (5) s'étendant verticalement,
b) un corps de palier pivotant (4) qui est monté de manière pivotante dans ou sur l'unité de palier pivotant (3) autour du premier axe de pivotement (5),
c) une barre d'attelage (7), qui est reliée au corps de palier pivotant (4) à une première extrémité et à une deuxième extrémité libre opposée présente une boule d'attelage (8),
d) un dispositif d'entraînement (9), au moyen duquel la barre d'attelage (7) peut être déplacée d'une position de fonctionnement (10), dans laquelle la boule d'attelage (8) est librement accessible derrière l'arrière du véhicule, vers une position de stationnement (11) et inversement, dans laquelle la boule d'attelage (8) est cachée en dessous du véhicule, dans lequel la barre d'attelage (7) lors du transfert de la position de fonctionnement (10) en position de stationnement (11) et inversement par rapport à l'unité de palier pivotant (3) est mobile en rotation autour du premier axe de pivotement (5),
e) un guide à coulisse (13), au moyen duquel le corps de palier pivotant (4) lors du transfert de la position de fonctionnement (10) à la position de stationnement (11) et inversement peut être déplacé tant en translation dans la direction verticale entre un point mort haut et un point mort bas qu'en rotation autour du premier axe de pivotement (5) aligné verticalement, dans lequel un bloc coulissant (14) sur ou dans l'unité de palier pivotant (3) ou le corps de palier pivotant (4) et une piste de coulisse (15) coopérant avec le bloc coulissant (14) sont disposés sur ou dans le corps de palier pivotant (4) ou l'unité de palier pivotant (3), et
f) au moins un dispositif de blocage (16) grâce auquel le corps de palier pivotant (4) se trouvant dans la position de stationnement (11) et/ou dans la position de fonctionnement (10) peut être bloqué par rapport à l'unité de palier pivotant (3) et la barre d'attelage (7) peut être bloquée par rapport au corps de palier pivotant (4) ou à l'unité de palier pivotant (3),
dans lequel la barre d'attelage (7) à sa deuxième extrémité peut pivoter autour d'un deuxième axe de pivotement par rapport au corps de palier pivotant (4) et la barre d'attelage (7) dans la position de fonctionnement (10) au point mort haut associé du corps de palier pivotant (4) peut être bloquée sur une surface de butée (134) se trouvant à sa deuxième extrémité directement sur une surface de butée (144) de l'unité de palier pivotant (3), dans lequel la surface de butée (134) se trouvant à la deuxième extrémité de la barre d'attelage (7) d'une part et la boule d'attelage (8) d'autre part sont disposées sur des côtés différents du deuxième axe de pivotement (6) et **caractérisé en ce que** le dispositif d'entraînement présente un entraînement à broche et le corps de palier pivotant (4) ou un corps d'actionnement (22) présente un filetage interne disposé à l'intérieur de ou sur celui-ci.

2. Dispositif de remorquage (1) selon la revendication 1, **caractérisé en ce que** la barre d'attelage (7) présente un tronçon libre en porte-à-faux (145) à la deuxième extrémité opposée à la boule d'attelage (8) sur laquelle est disposée la surface de butée (134).

3. Dispositif de remorquage (1) selon la revendication 1, **caractérisé en ce que** la barre d'attelage (7) en position de stationnement au point mort haut du corps de palier pivotant (4) peut être bloquée avec sa deuxième extrémité sur une autre surface de butée (146) de l'unité de palier pivotant (3).

4. Dispositif de remorquage (1) selon la revendication 1, **caractérisé en ce que**, en raison de la gravité, la barre d'attelage (7) exerce un couple de rotation tel autour de l'axe de pivotement que la boule d'attelage (8) s'efforce de s'abaisser dans une position présentant une hauteur géodésique inférieure.

5. Dispositif de remorquage (1) selon les revendications 1 et 2, **caractérisé en ce que** le dispositif d'entraînement peut être entraîné par un moteur électrique.

6. Dispositif de remorquage (1) selon une des revendications précédentes, **caractérisé en ce que** le corps d'actionnement (22) est mobile dans la direction du premier axe de pivotement par rapport au corps de palier pivotant (4), dans lequel de préférence un mouvement relatif entre le corps d'actionnement (22) et le corps de palier pivotant (4) est possible exclusivement avant de quitter et/ou après avoir atteint le point mort haut du corps de palier pivotant (4) dans l'unité de palier pivotant (3).

7. Dispositif de remorquage (1) selon une des revendications précédentes, **caractérisé en ce que** la surface de butée (134) de la barre d'attelage (7) et la surface de butée (144) de l'unité de palier pivotant (3) s'engrènent par conjonction de forme lors du blocage dans la position de fonctionnement (10) et/ou dans la position de stationnement (11).

8. Dispositif de remorquage (1) selon une des revendications précédentes, **caractérisé en ce qu'**en position de fonctionnement et/ou en position de stationnement deux surfaces de butée opposées (144, 147) de l'unité de palier pivotant (3) qui interagissent avec la deuxième extrémité de la barre d'attelage (7) empêchent le basculement autour du premier axe de pivotement (5) dans les deux directions de rotation.

9. Dispositif de remorquage (1) selon une des revendications précédentes, **caractérisé en ce qu'**un évidement (35) dans l'unité de palier pivotant (3), vu en coupe transversale à travers celui-ci, forme au moins essentiellement une forme en V ou une forme de coin, dans lequel l'évidement (35) englobe au moins la surface de butée (34) de l'unité de palier pivotant (3) .

10. Dispositif de remorquage (1) selon une des revendications précédentes, **caractérisé en ce qu'**un blocage supplémentaire sur le corps de palier pivotant (4) dans l'unité de palier pivotant (3) est accompli par un corps de blocage (24).
